(19) Europäisches Patentamt
European Patent Office
Office européen des brevets

(11) **EP 4 664 176 A2**

(12) **EUROPEAN PATENT APPLICATION**

(43) Date of publication:
**17.12.2025   Bulletin 2025/51**

(21) Application number: **25211717.1**

(22) Date of filing: **28.10.2025**

(51) International Patent Classification (IPC):
**G02B 13/00** (2006.01)     **G02B 9/62** (2006.01)

(52) Cooperative Patent Classification (CPC):
**G02B 9/62; G02B 13/0045**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:   **30.10.2024   CN 202411533834**

(71) Applicant: **Jiangxi OFILM Optical Co., Ltd.
Nanchang, Jiangxi 330096 (CN)**

(72) Inventors:
• **LI, Xiangyu**
  **Nanchang, Jiangxi 330096 (CN)**
• **LIU, Binbin**
  **Shenzhen 518106 (CN)**
• **ZHANG, Luobin**
  **Nanchang, Jiangxi 330096 (CN)**

(74) Representative: **Metida
Gyneju str. 16
01109 Vilnius (LT)**

(54)   **OPTICAL SYSTEM, IMAGE MODULE, AND ELECTRONIC DEVICE**

(57)     An optical system (10) includes a first lens (L1), a second lens (L2), a third lens (L3), a fourth lens (L4), a fifth lens (L5), a sixth lens (L6). Each of the first, third, and fifth lenses (L1, L3, L5) has positive refractive power, each of the second, fourth, and sixth lenses (L2, L4, L6) has negative refractive power. Object side surfaces (S1, S3, S5, S9) of the first, second, third, and fifth lenses (L1, L2, L3, L5) and an imaging side surface (S6) of the third lens (L3) are convex near the optical axis (101), imaging side surfaces (S2, S4, S8, S10, S12) of the first, second, fourth, fifth, and sixth lenses (L1, L2, L4, L5, L6) are concave near the optical axis (101). The optical system (10) satisfies: 1.9<FNO<3.5, and 19°<FOV<33°.

FIG.1

EP 4 664 176 A2

**Description**

FIELD

The present invention relates to field of imaging, and in particular to an optical system, an image module, and an electronic device.

BACKGROUND

With the continuous advancement of smartphone technology, users' expectations for the photography capabilities of their phones are also constantly rising, especially the demand for zoom functions is increasing day by day. To achieve a wider zoom range, long focal length lens technology has become crucial.

How to ensure that the long focal length lens can provide sufficient light intake and high-definition imaging effects while maintaining its long focal length shooting capabilities has always been a challenge for technicians in the industry. This involves technological innovation and optimization in multiple aspects such as optical design, material selection, and image processing. With the continuous development of technology, it may be foreseen that there will be more innovative solutions in the future to meet users' high standards for smartphone photography.

SUMMARY

The present disclosure discloses an optical system, an image module, and an electronic device. The optical system may meet the requirement of ensuring sufficient light intake and high-definition imaging effect of the lens while maintaining the long focal length shooting capability.

In order to achieve the above objects, in a first aspect, the present application discloses an optical system with six lenses having refractive power. The optical system sequentially includes a first lens having positive refractive power, a second lens having negative refractive power, a third lens having positive refractive power, a fourth lens having negative refractive power, a fifth lens having positive refractive power, a sixth lens having negative refractive power, and an image plane from an object side to an imaging side along an optical axis. An object side surface of the first lens is convex near the optical axis, an imaging side surface of the first lens is concave near the optical axis, an object side surface of the second lens is convex near the optical axis, an imaging side surface of the second lens is concave near the optical axis, an object side surface of the third lens is convex near the optical axis, an imaging side surface of the third lens is convex near the optical axis, an imaging side surface of the fourth lens is concave near the optical axis, an object side surface of the fifth lens is convex near the optical axis, an imaging side surface of the fifth lens is concave near the optical axis, and an imaging side surface of the sixth lens is concave near the optical axis.

In the optical system provided by the present application, the combination of the first lens having positive refractive power and the second lens having negative refractive power is conducive to correcting the spherical aberration on the optical axis of the optical system; the combination of the third lens having positive refractive power and the fourth lens having negative refractive power is conducive to correcting the astigmatism and spherical aberration on the optical axis of the optical system; the fifth lens having positive refractive power and the sixth lens having negative refractive power are helpful in correcting the field curvature of the optical system; the convex object side surface and the concave image side surface of the first lens near the optical axis are beneficial for the convergence of light in the optical system, thereby improving the optical performance of the optical system, and the concave image side surface of the sixth lens is conducive to astigmatism and field curvature.

In some embodiments, the optical system satisfies the following conditional expressions: $1.9<FNO<3.5$, and $19°<FOV<33°$. Wherein, FNO is the aperture number of the optical system and FOV is the maximum field of view angle of the optical system. When satisfying the above conditional expression, the optical system may have a large aperture characteristic, which allow the optical system to have sufficient light intake, thereby allowing the captured images to be clearer, and achieving high-quality night scenes, starry skies and other low-brightness object space scenes.

In a second aspect, the present application discloses an image module. The image module includes a photosensitive chip and the above-mentioned optical system, the photosensitive chip is arranged on the imaging side of the optical system.

In a third aspect, the present application discloses an electronic device. The electronic device includes a housing and the above-mentioned image module, the image module is arranged in the housing.

BRIEF DESCRIPTION OF THE DRAWINGS

To better describe and illustrate embodiments and/or examples of those inventions disclosed herein, reference may be made to one or more of the accompanying drawings. The additional details or examples used to describe the drawings should not be construed as limiting the scope of any of the disclosed inventions, the embodiments and/or examples presently described, and the best modes currently understood of these inventions.

FIG. 1 is a schematic structure diagram of an optical system of a first embodiment of the present application.
FIG. 2 is an aberration diagram of the optical system of the first embodiment of the present application.
FIG. 3 is a schematic structure diagram of an optical system of a second embodiment of the present application.
FIG.4 is an aberration diagram of the optical system of the second embodiment of the present application.
FIG. 5 is a schematic structure diagram of an optical system of a third embodiment of the present application.
FIG. 6 is an aberration diagram of the optical system of the third embodiment of the present application.
FIG. 7 is a schematic structure diagram of an optical system of a fourth embodiment of the present application.
FIG. 8 is an aberration diagram of the optical system of the fourth embodiment of the present application.
FIG. 9 is a schematic structure diagram of an optical system of a fifth embodiment of the present application.
FIG. 10 is an aberration diagram of the optical system of the fifth embodiment of the present application.
FIG. 11 is a schematic structure diagram of an optical system of a sixth embodiment of the present application.
FIG. 12 is an aberration diagram of the optical system of the sixth embodiment of the present application.
FIG. 13 is a schematic structure diagram of an optical system of a seventh embodiment of the present application.
FIG. 14 is an aberration diagram of the optical system of the seventh embodiment of the present application.
FIG. 15 is a schematic structure diagram of an optical system of an eighth embodiment of the present application.
FIG. 16 is an aberration diagram of the optical system of the eighth embodiment of the present application.
FIG. 17 is a schematic structure diagram of an optical system of a ninth embodiment of the present application.
FIG. 18 is an aberration diagram of the optical system of the ninth embodiment of the present application.
FIG. 19 is a schematic diagram of an image module of an embodiment of the present application.
FIG. 20 is a schematic diagram of an electronic device of an embodiment of the present application.

DETAILED DESCRIPTION

The following will describe the technical solutions of the embodiments of the present disclosure clearly and completely in combination with the accompanying drawings of the embodiments of the present disclosure. Obviously, the described embodiments are only part of the embodiments of the present disclosure, not all of them. Based on the embodiments of the present disclosure, those skilled in the art can make various modifications or variations without departing from the spirit or scope of the present disclosure. All other embodiments obtained by persons of ordinary skill in the art without making creative efforts fall within the scope of protection of the present disclosure.

A first aspect of the present application provides an optical system with six lenses having refractive power, from an object side to an image side along an optical axis of the optical system, the optical system sequentially includes a first lens having positive refractive power, a second lens having negative refractive power, a third lens having positive refractive power, a fourth lens having negative refractive power, a fifth lens having positive refractive power, and a sixth lens having negative refractive power. An object side surface of the first lens is convex near the optical axis, an imaging side surface of the first lens is concave near the optical axis, an object side surface of the second lens is convex near the optical axis, an imaging side surface of the second lens is concave near the optical axis, an object side surface of the third lens is convex near the optical axis, an imaging side surface of the third lens is convex near the optical axis, an imaging side surface of the fourth lens is concave near the optical axis, an object side surface of the fifth lens is convex near the optical axis, an imaging side surface of the fifth lens is concave near the optical axis, and an imaging side surface of the sixth lens is concave near the optical axis.

In the optical system provided by the present application, the combination of the first lens having positive refractive power and the second lens having negative refractive power is conducive to correcting the spherical aberration on the optical axis of the optical system; the combination of the third lens having positive refractive power and the fourth lens having negative refractive power is conducive to correcting the astigmatism and spherical aberration on the optical axis of the optical system; the fifth lens having positive refractive power and the sixth lens having negative refractive power are helpful in correcting the field curvature of the optical system; the convex object side surface and the concave image side surface of the first lens near the optical axis are beneficial for the convergence of light in the optical system, thereby improving the optical performance of the optical system, and the concave image side surface of the sixth lens is conducive to astigmatism and field curvature.

In some embodiments, the optical system may satisfy the following conditional expressions: $1.9<FNO<3.5$, and $19°<FOV<33°$. Wherein, FNO is the aperture number of the optical system and FOV is the maximum field of view angle of the optical system. When satisfying the above conditional expression, the optical system may have a large aperture characteristic, which allow the optical system to have sufficient light intake, thereby allowing the captured images to be clearer, and achieving high-quality night scenes, starry skies and other low-brightness object space scenes.

In some embodiments, the optical system may further satisfy: $2<FNO<3.2$, $20°<FOV<32°$, thereby obtaining an optical system with better imaging effect. In some embodiments, a value of FNO may be 2.10, 2.20, 2.40, 2.30, 2.56, 2.58, 2.60, 2.70, 2.80, or 3.00. In some embodiments, a value of FOV may be 21.00, 23.00, 24.00, 25.35, 25.44, 25.47, 25.69, 26.87, 30.89, or 31.51.

In some embodiments, the optical system may satisfy the following conditional expression: 1.65mm<ImgH/FNO<3mm. Wherein, ImgH is half of an image height corresponding to the maximum field of view angle of the optical system and FNO is the aperture number of the optical system. When satisfying the above conditional expression, the optical system may have the characteristic of a long effective focal length, thereby enabling the optical system to have the feature of shooting at a longer distance. In some embodiments, the optical system may further satisfy: 1.8mm<ImgH/FNO<2.8mm, thereby obtaining an optical system with better imaging effect. In some embodiments, a value of ImgH/FNO may be 2.043, 2.315, 2.321, 2.413, 2.453, 2.508, 2.562, 2.617, 2.651, 2.736, or 2.799.

In some embodiments, the optical system may satisfy the following conditional expression: 3.7<TTL/ImgH<5.2. Wherein, TTL is a distance from the object side surface of the first lens to an image plane along the optical axis, and ImgH is half of the image height corresponding to the maximum field of view angle of the optical system. When satisfying the above conditional expression, the system has an ultra-thin characteristic, which is more advantageous for shooting medium-distance objects and miniaturizing the camera device. In some embodiments, the optical system may further satisfy: 3.9<TTL/ImgH<5, thereby obtaining an optical system with better imaging performance. In some embodiments, a value of TTL/ImgH may be 3.913, 4.068, 4.070, 4.086, 4.267, 4.283, 4.610, 4.651, 4.860, or 4.960.

In some embodiments, the optical system may satisfy the following conditional expression: 0.9<R6/R7<4. Wherein, R6 is a radius of curvature of the imaging side surface of the third lens at the optical axis, and R7 is a radius of curvature of the object side surface of the fourth lens at the optical axis. When the above conditional expression is satisfied, a thickness ratio of an air gap between the third lens and the fourth lens may be effectively controlled, which is beneficial to reducing the manufacturing sensitivity and balancing the higher-order coma aberration of the optical system, thereby improving the imaging quality of the optical system. In some embodiments, a value of R6/R7 may be 0.91, 0.947, 0.953, 1.023, 1.026, 1.054, 1.112, 1.216, 1.326, 1.346, 3.262, or 3.83.

In some embodiments, the optical system may satisfy the following conditional expression: 0.4<SD6/(CT3+ET3)<1.4. Wherein, SD6 is an effective semi-aperture of the imaging side surface of the third lens, CT3 is a center thickness of the third lens, and ET3 is an edge thickness of the third lens. When the above conditional expression is satisfied, by reasonably controlling a ratio of the aperture and the thickness of the third lens, which is equivalent to controlling the curvature of the third lens, the aberration of the optical system may be effectively balanced, the sensitivity of the optical system may be reduced, and the performance of the optical system may be improved. Further, the optical system may satisfy the following conditional expression: 0.5<SD6/(CT3+ET3)<1.3, thereby obtaining an optical system with better imaging performance. In some embodiments, a value of SD6/(CT3+ET3) may be 0.540, 0.673, 0.733, 0.816, 0.951, 1.113, 1.151, 1.208, 1.251, or 1.294.

In some embodiments, the optical system may satisfy the following conditional expression: 0.7<SD12/(CT6+ET6)<1.7. Wherein, SD12 is an effective semi-aperture of the imaging side surface of the sixth lens, CT6 is a center thickness of the sixth lens, and ET6 is an edge thickness of the sixth lens. When the above conditional expression is satisfied, by reasonably controlling a ratio of the diameter and the thickness of the sixth lens, which is equivalent to controlling the curvature of the sixth lens, the aberration of the optical system may be effectively balanced, the sensitivity of the optical system may be reduced, and the performance of the optical system may be improved. Further, the optical system may satisfy the following conditional expression: 0.8<SD12/(CT6+ET6)<1.6, thereby obtaining an optical system with better imaging performance. In some embodiments, a value of SD12/(CT6+ET6) may be 0.913, 0.936, 0.954, 0.992, 1.023, 1.065, 1.072, 1.084, 1.124, or 1.147.

In some embodiments, the optical system may satisfy the following conditional expression: 0.4<(|f2|+|f3|)/(|f4|+|f5|)<0.8. Wherein, f2 is an effective focal length of the second lens, f3 is an effective focal length of the third lens, f4 is an effective focal length of the fourth lens, and f5 is an effective focal length of the fifth lens. When the above conditional expression is satisfied, by controlling a ratio of the effective focal lengths of the second lens, the third lens, the fourth lens, and the fifth lens within a certain range, the refractive power of a combined lens of the entire optical system will not be too strong, and the higher-order spherical aberration may be corrected, thereby allowing the optical system to have good imaging quality. In some embodiments, a value of (|f2|+|f3|)/(|f4|+|f5|) may be 0.426, 0.613, 0.621, 0.639, 0.640, 0.654, 0.666, 0.678, 0.682, or 0.691.

In some embodiments, the optical system may satisfy the following conditional expression: 1.35<(f1+|f6|)/f<2.75. Wherein, f is an effective focal length of the optical system, f1 is an effective focal length of the first lens, and f6 is an effective focal length of the sixth lens. When the above conditional expression is satisfied, by controlling a ratio of the effective focal lengths of the first lens and the sixth lens to the effective focal length of the entire optical system within a certain range, the refractive power of the first lens will not be too strong for the effective focal length of the entire system, which may correct the high-order spherical aberration and allow the optical system to have good imaging quality. In some embodiments, a value of (f1+|f6|)/fmay be 1.866, 1.914, 1.966, 1.986, 2.013, 2.115, 2.246, 2.447, 2.645, 2.513, or 2.732.

In some embodiments, the optical system may satisfy the following conditional expression: 0.6<f1/f<1.5.

Wherein, f is the effective focal length of the optical system, and f1 is the effective focal length of the first lens. When the above conditional expression is satisfied, by controlling a ratio of the effective focal length of the first lens to the effective focal length of the entire optical system within a certain range, the refractive power of the first lens will not be too strong for the effective focal length of the entire system, which may correct high-order spherical aberration and enable the optical system to have good imaging quality. Further, the optical system may satisfy the following conditional expression: 0.7<f1/f<1.4, thereby obtaining an optical system with better optical imaging effect. In some embodiments, a value of f1/f may be 0.755, 0.797, 0.839, 0.946, 1.049, 1.077, 1.199, 1.258, 1.273, or 1.273.

In some embodiments, the optical system may satisfy the following conditional expression: -0.8<f2/f<-0.3. Wherein, f2 is the effective focal length of the second lens. When the above conditional expression is satisfied, by controlling a ratio of the effective focal length of the second lens to the effective focal length of the entire optical system within a certain range, the refractive power of the second lens will not be too strong for the effective focal length of the entire system, which may correct the high-order spherical aberration and allow the optical system to have good imaging quality. Further, the optical system may satisfy the following conditional expression: - 0.7<f2/f<-0.35, thereby obtaining an optical system with better optical imaging effect. In some embodiments, a value of f2/f may be -0.691, -0.640, -0.632, -0.544, -0.541, -0.527, -0.484, -0.483, -0.399, or -0.351.

In some embodiments, the optical system may satisfy the following conditional expression: 0.2<f3/f<0.6. Wherein, f3 is the effective focal length of the third lens. When the above conditional expression is satisfied, by controlling a ratio of the effective focal length of the third lens to the effective focal length of the entire optical system within a certain range, the refractive power of the third lens will not be too strong for the effective focal length of the entire system, which may correct high-order spherical aberration and enable the optical system to have good imaging quality. Further, the optical system may satisfy the following conditional expression: 0.25<f3/f<0.5, thereby obtaining an optical system with better optical imaging effect. In some embodiments, a value of f3/f may be 0.251, 0.295, 0.326, 0.347, 0.350, 0.387, 0.419, 0.424, 0.428, or 0.446.

In some embodiments, the optical system may satisfy the following conditional expression: -1.2<f4/f<-0.3. Wherein, f4 is the effective focal length of the fourth lens. When the above conditional expression is satisfied, by controlling a ratio of the effective focal length of the fourth lens to the effective focal length of the entire optical system within a certain range, the refractive power of the fourth lens relative to the effective focal length of the entire optical system will not be too strong, which may correct the high-order spherical aberration and allow the optical system to have good imaging quality. Further, the optical system may satisfy the following conditional expression: -1.1<f4/f<-0.35, thereby obtaining an optical system with better imaging effect. In some embodiments, a value of f4/f may be -1.029, -0.774, -0.702, -0.691, -0.639, -0.546, -0.520, -0.483, -0.380, or -0.311.

In some embodiments, the optical system may satisfy the following conditional expression: 0.4<f5/f<1.3. Wherein, f5 is the effective focal length of the fifth lens. When the above conditional expression is satisfied, by controlling a ratio of the effective focal length of the fifth lens to the effective focal length of the entire optical system within a certain range, the refractive power of the fifth lens relative to the effective focal length of the entire optical system will not be too strong, which may correct high-order spherical aberration and enable the optical system to have good imaging quality. Further, the optical system may satisfy the following conditional expression: 0.45<f5/f<1.2, thereby obtaining an optical system with better imaging effect. In some embodiments, a value of f5/f may be 0.506, 0.694, 0.782, 0.785, 0.816, 0.953, 0.961, 0.983, 1.153, or 1.196.

In some embodiments, the optical system may satisfy the following conditional expression: -1.6<f6/f<-0.5. Wherein, f6 is the effective focal length of the sixth lens. When the above conditional expression is satisfied, by controlling a ratio of the effective focal length of the sixth lens to the effective focal length of the entire optical system within a certain range, the refractive power of the sixth lens relative to the effective focal length of the entire optical system will not be too strong, which may correct high-order spherical aberration and enable the system to have good imaging quality. Further, the optical system may satisfy the following conditional expression: - 1.5<f6/f<-0.6, thereby obtaining an optical system with better imaging effect. In some embodiments, a value of f6/f may be -1.459, -1.387, -1.018, -0.932, -0.926, -0.890, -0.817, -0.751, -0.628, or -0.606.

In some embodiments, the optical system may satisfy the following conditional expression: 0.15<R1/f<0.45. Wherein, R1 is a radius of curvature of the object side surface of the first lens at the optical axis. When the above conditional expression is satisfied, by controlling a ratio of the radius of curvature of the first lens to the effective focal length of the entire optical system within a certain range, the astigmatism of the first lens may be kept within a reasonable range, and the astigmatism generated by the previous lenses may be effectively balanced, thereby allowing the optical system to have good imaging quality. Further, the optical system may satisfy the following conditional expression: 0.2<R1/f<0.4, thereby obtaining an optical system with better imaging effect. In some embodiments, a value of R1/fmay be 0.203, 0.245, 0.283, 0.285, 0.294, 0.299, 0.302, 0.320, 0.373, or 0.378.

In some embodiments, the optical system may satisfy the following conditional expression: 0.35<R2/f<1.1. Wherein, R2 is a radius of curvature of the imaging side surface of the first lens at the optical axis. When the above conditional expression is satisfied, by controlling a ratio of the radius of curvature of the first lens to the effective focal length of the entire optical system within a certain range, the astigmatism of the first lens may be kept within a reasonable range, and the astigmatism generated by the previous lenses may be effectively balanced, thereby allowing the optical system to have good imaging quality. Further, the optical system may satisfy the following conditional expression: 0.4<R2/f<0.9, thereby obtaining an optical system with better imaging effect. In some embodiments, a value of R2/f may be 0.411, 0.449, 0.494, 0.518, 0.529, 0.581, 0.679, 0.687, 0.694, or 0.811.

In some embodiments, the optical system may satisfy the following conditional expression: 0.3<R3/f<0.8. Wherein, R3 is a radius of curvature of the object side surface of the second lens at the optical axis. When the above conditional expression is satisfied, by controlling a ratio of the radius of curvature of the second lens to the effective focal length of the entire optical system within a certain range, the astigmatism of the second lens may be kept within a reasonable range, and the astigmatism generated by the previous lenses may be effectively balanced, thereby allowing the optical system to have good imaging quality. Further, the optical system may satisfy the following conditional expression: 0.4<R3/f<0.7, thereby obtaining an optical system with better imaging effect. In some embodiments, a value of R3/f may be 0.471, 0.472, 0.491, 0.506, 0.512, 0.519, 0.522, 0.598, 0.605, or 0.696.

In some embodiments, the optical system may satisfy the following conditional expression: 0.1<R4/f<0.35. Wherein, R4 is a radius of curvature of the imaging side surface of the second lens at the optical axis. When the above conditional expression is satisfied, by controlling a ratio of the radius of curvature of the second lens to the effective focal length of the entire optical system within a certain range, the astigmatism of the second lens may be kept within a reasonable range, and the astigmatism generated by the previous lenses may be effectively balanced, thereby allowing the optical system to have good imaging quality. Further, the optical system may satisfy the following conditional expression: 0.15<R4/f<0.3, thereby obtaining an optical system with better imaging effect. In some embodiments, a value of R4/f may be 0.153, 0.163, 0.179, 0.188, 0.189, 0.198, 0.201, 0.231, 0.234, or 0.294.

In some embodiments, the optical system may satisfy the following conditional expression: 0.15<R5/f<0.45. Wherein, R5 is a radius of curvature of the object side surface of the third lens at the optical axis. When the above conditional expression is satisfied, by controlling a ratio of the radius of curvature of the third lens to the effective focal length of the entire optical system within a certain range, the astigmatism of the third lens may be kept within a reasonable range, and the astigmatism generated by the previous lenses may be effectively balanced, thereby allowing the optical system to have good imaging quality. Further, the optical system may satisfy the following conditional expression: 0.2<R5/f<0.4, thereby obtaining an optical system with better imaging effect. In some embodiments, a value of R5/f may be 0.204, 0.227, 0.244, 0.267, 0.275, 0.276, 0.292, 0.304, 0.357, or 0.361.

In some embodiments, the optical system may satisfy the following conditional expression: -2.3<R6/f<-0.2. Wherein, R6 is the radius of curvature of the imaging side surface of the third lens at the optical axis. When the above conditional expression is satisfied, by controlling a ratio of the radius of curvature of the third lens to the effective focal length of the entire optical system within a certain range, the astigmatism of the third lens may be kept within a reasonable range, and the astigmatism generated by the previous lenses may be effectively balanced, thereby allowing the optical system to have good imaging quality. Further, the optical system may satisfy the following conditional expression: -2.1<R6/f<-0.3, thereby obtaining an optical system with better imaging effect. In some embodiments, a value of R6/f may be -2.039, -1.564, -1.455, -0.548, -0.539, -0.433, -0.415, -0.401, -0.383, or -0.305.

In some embodiments, the optical system may satisfy the following conditional expression: -0.9<R7/f<-0.1. Wherein, R7 is the radius of curvature of the object side surface of the fourth lens at the optical axis. When the above conditional expression is satisfied, by controlling a ratio of the radius of curvature of the fourth lens to the effective focal length of the entire optical system within a certain range, the astigmatism of the fourth lens may be kept within a reasonable range, and the astigmatism generated by the previous lenses may be effectively balanced, thereby allowing the optical system to have good imaging quality. Further, the optical system may satisfy the following conditional expression: -0.7<R7/f<-0.2, thereby obtaining an optical system with better imaging effect. In some embodiments, a value of R7/f may be -0.651, -0.579, -0.572, -0.532, -0.499, -0.480, -0.411, -0.391, -0.342, or -0.289.

In some embodiments, the optical system may satisfy the following conditional expression: 0.4<|R8|/f. Wherein, R8 is a radius of curvature of the imaging side surface of the fourth lens at the optical axis. When the above conditional expression is satisfied, by controlling a ratio of the radius of curvature of the fourth lens to the effective focal length of the entire optical system within a certain range, the astigmatism of the fourth lens may be kept within a reasonable range, and the astigmatism generated by the previous lenses may be effectively balanced, thereby allowing the optical system to have good imaging quality. Further, the optical system may satisfy the following conditional expression: -0.5<|R8|/f<20, thereby obtaining an optical system with better imaging effect. In some embodiments, a value of |R8|/f may be 0.540, 0.837, 1.128, 1.145, 1.170, 1.312, 2.828, 10.468, 17.218, or 19.485.

In some embodiments, the optical system may satisfy the following conditional expression: 0.2<R9/f<0.6. Wherein, R9 is a radius of curvature of the object side surface of the fifth lens at the optical axis. When the above conditional expression is satisfied, by controlling a ratio of the radius of curvature of the fifth lens to the effective focal length of the entire optical system within a certain range, the astigmatism of the fifth lens may be kept within a reasonable range, and the astigmatism generated by the previous lenses may be effectively balanced, thereby allowing the optical system to have good imaging quality. Further, the optical system may satisfy the following conditional expression: 0.25<R9/f<0.5, thereby obtaining an optical system with better imaging effect. In some embodiments, a value of R9/f may be 0.254, 0.274, 0.356, 0.375, 0.404, 0.405, 0.431, 0.437, 0.473, or 0.496.

In some embodiments, the optical system may satisfy the following conditional expression: 0.6<R10/f. Wherein, R10 is a radius of curvature of the imaging side surface of the fifth lens at the optical axis. When the above conditional expression is satisfied, by controlling a ratio of the radius of curvature of the fifth lens to the effective focal length of the entire optical system within a certain range, the astigmatism of the fifth lens may be kept within a reasonable range, and the astigmatism generated by the previous lenses may be effectively balanced, thereby allowing the optical system to have good imaging quality. Further, the optical system may satisfy the following conditional expression: 0.7<R10/f<25, thereby obtaining an optical system with better imaging effect. In some embodiments, a value of R10/f may be 0.734, 0.806, 0.846, 1.424, 1.607, 1.648, 2.325, 2.734, 2.933, or 20.332.

In some embodiments, the optical system may satisfy the following conditional expression: 0.5<|R11|/f. Wherein, R11 is a radius of curvature of the object side surface of the sixth lens at the optical axis. When the above conditional expression is satisfied, by controlling a ratio of the radius of curvature of the sixth lens to the effective focal length of the entire optical system within a certain range, the astigmatism of the sixth lens may be kept within a reasonable range, and the astigmatism generated by the previous lenses may be effectively balanced, thereby obtaining an optical system with better imaging effect. In some embodiments, a value of |R11|/f may be 0.505, 0.542, 0.565, 0.591, 0.938, 1.456, 2.119, 2.948, 3.096, or 28.731.

In some embodiments, the optical system may satisfy the following conditional expression: 0.2<R12/f<0.95. Wherein, R12 is a radius of curvature of the imaging side surface of the sixth lens at the optical axis. When the above conditional expression is satisfied, by controlling a ratio of the radius of curvature of the sixth lens to the effective focal length of the entire optical system within a certain range, the astigmatism of the sixth lens may be kept within a reasonable range and the astigmatism generated by the previous lenses may be effectively balanced, thereby ensuring good imaging quality of the optical system. Further, the optical system may satisfy the following conditional expression: 0.25<R12/f<0.85, thereby obtaining an optical system with better imaging effect. In some embodiments, a value of R12/f may be 0.254, 0.302, 0.304, 0.424, 0.536, 0.575, 0.639, 0.664, 0.726, or 0.797.

In some embodiments, the optical system may satisfy the following conditional expression: 2.2<CT1/CT2<4.5. Wherein, CT1 is a center thickness of the first lens at the optical axis, and CT2 is a center thickness of the second lens at the optical axis. When the above conditional expression is satisfied, by reasonably controlling the center thicknesses of the first and second lenses at the optical axis, it is beneficial to meeting the molding process requirements of the two plastic lenses and correcting off-axis coma aberration. Further, the optical system may satisfy the following conditional expression: 2.4<CT1/CT2<4, thereby obtaining an optical system with better imaging effect. In some embodiments, a value of CT1/CT2 may be 2.487, 3.053, 2.458, 3.107, 3.109, 3.112, 3.449, 3.722, 3.843, or 3.943.

In some embodiments, the optical system may satisfy the following conditional expression: 0.2<CT2/CT3<0.7. Wherein, CT3 is a center thickness of the third lens at the optical axis. When the above conditional expression is satisfied, by reasonably controlling the center thicknesses of the second and third lenses at the optical axis, it is beneficial to meeting the molding process requirements of the two plastic lenses and correcting off-axis coma aberration. Further, the optical system may satisfy the following conditional expression: 0.25<CT2/CT3<0.6, thereby obtaining an optical system with better imaging effect. In some embodiments, a value of CT2/CT3 may be 0.251, 0.291, 0.305, 0.344, 0.394, 0.414, 0.485, 0.487, 0.554, 0or .565.

In some embodiments, the optical system may satisfy the following conditional expression: 1.5<CT3/CT4<4.5. Wherein, CT4 is a center thickness of the fourth lens at the optical axis. When the above conditional expression is satisfied, by reasonably controlling the center thicknesses of the third and fourth lenses on the optical axis, it is beneficial to meeting the molding process requirements of the two plastic lenses and correcting off-axis coma aberration. Further, the optical system may satisfy the following conditional expression: 2<CT3/CT4<3.9, thereby obtaining an optical system with better imaging effect. In some embodiments, a value of CT3/CT4 may be 2.148, 2.303, 2.446, 2.579, 2.884, 2.940, 3.455, 3.578, 3.588, or 3.660.

In some embodiments, the optical system may satisfy the following conditional expression: 0.18<CT4/CT5<1. Wherein, CT5 is a center thickness of the fifth lens at the optical axis. When the above conditional expression is satisfied, by reasonably controlling the center thicknesses of the fourth and fifth lenses on the optical axis, it is beneficial to meeting the molding process requirements of the two plastic lenses and correcting off-axis coma aberration. Further, the optical system may satisfy the following conditional expression: 0.22<CT4/CT5<0.8, thereby obtaining an optical system with better imaging effect. In some embodiments, a value of CT4/CT5 may be 0.231, 0.252, 0.284, 0.298, 0.330, 0.344, 0.395, 0.426, 0.495, or 0.710.

In some embodiments, the optical system may satisfy the following conditional expression: 0.6<CT5/CT6<3.6. Wherein. When the above conditional expression is satisfied, by reasonably controlling the central thicknesses of the fifth and sixth lenses at the optical axis, it is conducive to meeting the molding process requirements of the two plastic lenses and correcting off-axis coma aberration. Further, the optical system may satisfy the following conditional expression:

0.65<CT5/CT6<3.3, thereby obtaining an optical system with better imaging effect. In some embodiments, a value of CT5/CT6 may be 0.613, 0.690, 0.986, 1.371, 1.632, 1.639, 1.723, 1.744, 1.826, or 3.011.

In some embodiments, the optical system may satisfy the following conditional expression: $1.5 < \Sigma CT/\Sigma AT < 5$. Wherein, $\Sigma CT$ is a sum of the central thicknesses of the first to sixth lenses at the optical axis, and $\Sigma AT$ is a sum of air spacings between the first to sixth lenses at the optical axis. Further, the optical system may satisfy the following conditional expression: $1.6 < \Sigma CT/\Sigma AT < 4.5$, thereby obtaining an optical system with better imaging effect. In some embodiments, a value of $\Sigma CT/\Sigma AT$ may be 1.614, 1.740, 2.260, 2.503, 2.617, 3.479, 3.899, 4.040, 4.098, or 4.365.

In some embodiments, the optical system may satisfy the following conditional expression: 0.1<AT34/(AT12+AT23+AT45)<2. Wherein, AT12 is an air spacing between the first and second lenses at the optical axis, AT23 is an air spacing between the second and third lenses at the optical axis, AT34 is an air spacing between the third and fourth lenses at the optical axis, and AT45 is an air spacing between the fourth and fifth lenses at the optical axis. When the above conditional expression is satisfied, the first to fifth lenses may be reasonably arranged, which avoid excessive or insufficient distances between the lenses, thereby effectively improving the space utilization rate, reducing the assembly difficulty of the lens, and facilitating miniaturization. Further, the optical system may satisfy the following conditional expression: 0.15<AT34/(AT12+AT23+AT45) <1.9, thereby obtaining an optical system with better imaging effect. In some embodiments, a value of AT34/(AT12+AT23+AT45) may be 0.181, 0.188, 0.552, 0.570, 0.612, 0.613, 0.636, 0.670, 0.837, or 1.816.

In some embodiments, the optical system may satisfy the following conditional expression: 0.35<AT56/(AT12+AT23+AT45)<3.9. Wherein, AT56 is an air spacing between the fifth and sixth lenses at the optical axis. When the above conditional expression is satisfied, the first to fifth lenses may be reasonably arranged, which avoid excessive or insufficient distances between the lenses, thereby effectively improving the space utilization rate, reducing the assembly difficulty of the lens, and facilitating miniaturization. Further, the optical system may satisfy the following conditional expression: 0.5<AT56/(AT12+AT23+AT45)<3.7, thereby obtaining an optical system with better imaging effect. In some embodiments, a value of AT56/(AT12+AT23+AT45) may be 0.540, 0.547, 0.773, 0.795, 0.844, 0.884, 1.969, 2.724, 3.501, or 3.593.

In some embodiments, the optical system may satisfy the following conditional expression: 2<TTL/BEL<5. Wherein, TTL is the distance along the optical axis from the object side surface of the first lens to the image plane, and BEL is the minimum distance from the object side surface of the sixth lens to the image plane. When the above conditional expression is satisfied, an operating space between the sixth lens and the image plane of the system is larger, which may reduce the overall sensitivity of the optical system, improve the imaging effect, and facilitate manufacturing in engineering. Further, the optical system may satisfy the following conditional expression: 2.3<TTL/BEL<4.5, thereby obtaining an optical system with better imaging effect. In some embodiments, a value of TTL/BEL may be 2.502, 3.201, 3.278, 3.359, 3.679, 3.744, 4.083, 4.086, 4.215, or 4.478.

A second aspect of the present disclosure also provides an image module, which includes the optical system of any one of the embodiments of the first aspect and a photosensitive chip. The photosensitive chip is arranged on the image side of the optical system.

A third aspect of the present disclosure also provides an electronic device, which includes a housing and the image module of the second aspect. The image module is arranged in the housing.

First embodiment

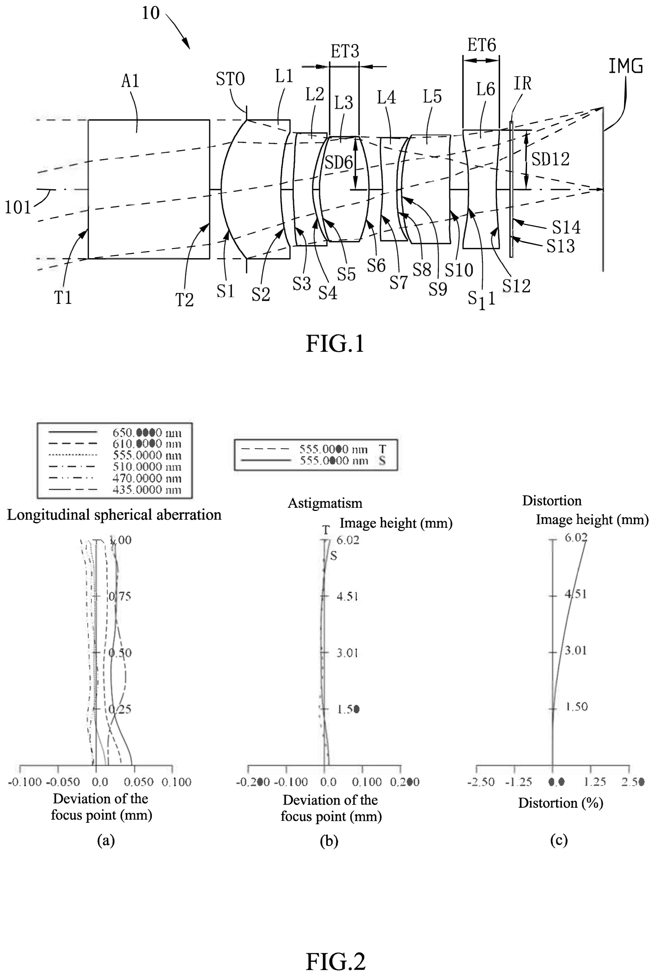

Referring to FIG. 1 and FIG. 2, an optical system 10 of an embodiment, from an object side to an imaging side along an optical axis 101, sequentially includes a prism A1, a first lens L1, a second lens L2, a third lens L3, a fourth lens L4, a fifth lens L5, and a sixth lens L6.

The prism A1 includes an object side surface T1 and an imaging side surface T2.

The first lens L1 has positive refractive power, an object side surface S1 of the first lens L1 is convex near the optical axis 101, an imaging side surface S2 of the first lens L1 is concave near the optical axis 101, the object side surface S1 of the first lens L1 is convex near a periphery of the first lens L1, and the imaging side surface S2 of the first lens L1 is concave near the periphery of the first lens L1.

The second lens L2 has negative refractive power, an object side surface S3 of the second lens L2 is convex near the optical axis 101, an imaging side surface S4 of the second lens L2 is concave near the optical axis 101, the object side surface S3 of the second lens L2 is convex near a periphery of the second lens L2, and the imaging side surface S4 of the second lens L2 is concave near the periphery of the second lens L2.

The third lens L3 has positive refractive power, an object side surface S5 of the third lens L3 is convex near the optical axis 101, an imaging side surface S6 of the third lens L3 is convex near the optical axis 101, the object side surface S5 of the third lens L3 is convex near a periphery of the third lens L3, and the imaging side surface S6 of the third lens L3 is convex near the periphery of the third lens L3.

The fourth lens L4 has negative refractive power, an object side surface S7 of the fourth lens L4 is concave near the optical axis 101, an imaging side surface S8 of the fourth lens L4 is concave near the optical axis 101, the object side surface S7 of the fourth lens L4 is convex near a periphery of the fourth lens L4, and the imaging side surface S8 of the fourth lens L4 is concave near the periphery of the fourth lens L4.

The fifth lens L5 has positive refractive power, an object side surface S9 of the fifth lens L5 is convex near the optical axis 101, an imaging side surface S10 of the fifth lens L5 is concave near the optical axis 101, the object side surface S9 of the fifth lens L5 is convex near a periphery of the fifth lens L5, the imaging side surface S10 of the fifth lens L5 is concave near the periphery of the fifth lens L5.

The sixth lens L6 has negative refractive power, an object side surface S11 of the sixth lens L6 is concave near the optical axis 101, and an imaging side surface S12 of the sixth lens L6 is concave near the optical axis 101, the object side surface S11 of the sixth lens L6 is concave near a periphery of the sixth lens L6, and the imaging side surface S12 of the sixth lens L6 is concave near the periphery of the sixth lens L6.

The first lens L1 to the sixth lens L6 are all made of plastic. In some embodiments, the lenses may all be made of glass, or a combination of glass and plastic, that is, some are plastic and some are glass. In addition, the optical system 10 also includes an aperture STO, a filter IR, and an image plane IMG. The aperture STO is arranged on the object side surface S1 of the first lens L1 to control the amount of light intake. The filter IR includes an object side surface S13 and an imaging side surface S14, where the object side surface S13 faces the sixth lens L6. An effective pixel area of a photosensitive chip is located on the image plane IMG.

The filter IR may be an infrared cut-off filter, which is used to filter out infrared light, so that the light entering the image plane IMG is visible light with a wavelength of 380nm to 780nm. The material of the infrared cut-off filter is glass and may be coated on the glass. Of course, in other embodiments, the filter IR may be an infrared pass filter, which is used to filter out visible light and only allow infrared light to pass through, which may be used for infrared cameras, etc.

The parameters of the optical system 10 are given in Table 1. In Table 1, the Y radius is the radius of curvature of the object side surface or the imaging side surface with the corresponding surface number at the optical axis 101. Surface number S1 and surface number S2 are the object side surface S1 and the imaging side surface S2 of the first lens L1, respectively. That is, for a same lens, the surface with a smaller surface number is the object side surface, and the surface with a larger surface number is the imaging side surface. In the parameter column "thickness", the first value is the thickness of the first lens L1 at the optical axis, the second value is the distance from the imaging side surface of the lens to the next optical surface (the object side surface of the next lens or the aperture surface) at the optical axis 101.

Table 1

| First embodiment | | | | | | | | |
|---|---|---|---|---|---|---|---|---|
| f=26.50mm, FNO=2.6mm, FOV=25.3496° , TTL=27.75mm, ImgH=6.02mm | | | | | | | | |
| Surface numeral | Name | Surface type | Y radius | Thickness (mm) | Material (mm) | Refractive index | Abbe number | Effective focal length (mm) |
| Object side | Object side | sphere | Infinity | Infinity | | | | |
| | Prism | sphere | Infinity | 8.8 | Glass | | | |
| | | sphere | Infinity | 2.6847318 | | | | |
| STO | Aperture | sphere | Infinity | -1.8397 | | | | |
| S1 | First lens L1 | asphere | 8.0040 | 4.3302 | Plastic | 1.54 | 55.68 | 27.80 |
| S2 | | asphere | 14.0115 | 0.8914 | | | | |
| S3 | Second lens L2 | asphere | 12.4708 | 1.4184 | Plastic | 1.64 | 23.97 | -13.97 |
| S4 | | asphere | 4.9779 | 0.5000 | | | | |
| S5 | Third lens L3 | asphere | 7.7249 | 3.6000 | Plastic | 1.54 | 55.68 | 9.21 |
| S6 | | asphere | -11.4728 | 0.9826 | | | | |
| S7 | Fourth lens L4 | asphere | -10.8853 | 1.0419 | Plastic | 1.55 | 55.93 | -14.48 |
| S8 | | asphere | 29.8792 | 0.3325 | | | | |
| S9 | Fifth lens L5 | asphere | 10.7056 | 3.5000 | Plastic | 1.59 | 28.39 | 20.79 |
| S10 | | asphere | 72.4510 | 1.3707 | | | | |

(continued)

| First embodiment | | | | | | | | |
|---|---|---|---|---|---|---|---|---|
| f=26.50mm, FNO=2.6mm, FOV=25.3496° , TTL=27.75mm, ImgH=6.02mm | | | | | | | | |
| Surface numeral | Name | Surface type | Y radius | Thickness (mm) | Material (mm) | Refractive index | Abbe number | Effective focal length (mm) |
| S11 | Sixth lens L6 | asphere | -38.5887 | 2.0070 | Plastic | 1.54 | 55.68 | -21.66 |
| S12 | | asphere | 16.9304 | 1.0000 | | | | |
| S13 | IR | sphere | Infinity | 0.2100 | Glass | 1.517 | 64.17 | |
| S14 | | sphere | Infinity | 6.5810 | | | | |
| IMG | Image plane | sphere | Infinity | -0.0121 | | | | |
| Reference wavelength: 555nm | | | | | | | | |

As shown in Table 1, f is the effective focal length of the optical system 10, FNO is the aperture number of the optical system 10, FOV is the maximum field of view angle of the optical system 10, TTL is the distance from the object side surface S1 of the first lens L1 to the image plane IMG along the optical axis 101, and ImgH is half of the image height corresponding to the maximum field of view angle of the optical system.

In the illustrated embodiment, the first lens L1 to the sixth lens are all aspheric lenses. The surface shape x of the aspheric surface may be defined by, but not limited to, the following aspherical formula:

$$x = \frac{ch^2}{1+\sqrt{1-(K+1)c^2h^2}} + \sum Aih^i$$

Wherein, x is a distance from a corresponding point on the aspheric surface to a plane tangent to the vertex on the optical axis, h is a distance from the corresponding point on the aspheric surface to the optical axis 101, c is a curvature at the optical axis of the aspheric surface; k is the cone coefficient; Ai is the coefficient corresponding to the i-th higher-order term of the aspheric surface. Table 2 shows the higher-order term coefficients k, A4, A6, A8, A10, A12, A14, A16, A18, and A20 of the aspheric surfaces in the first embodiment.

Table 2

| First embodiment | | | | | | |
|---|---|---|---|---|---|---|
| Aspheric coefficient | | | | | | |
| Surface number | S1 | S2 | S3 | S4 | S5 | S6 |
| K | -3.3920E+00 | 0.0000E+00 | 0.0000E+00 | -5.1184E+00 | 0.0000E+00 | -1.1483E+01 |
| A4 | 4.9851E-01 | -4.0555E-02 | -5.6302E-01 | -3.0861E-02 | -3.8390E-01 | -1.9910E-01 |
| A6 | -2.3535E-03 | 7.7345E-02 | 1.5822E-01 | 1.2358E-01 | 8.6276E-02 | 7.9681E-04 |
| A8 | 2.9207E-03 | 5.3112E-03 | -1.8308E-02 | -4.6591E-03 | 4.0894E-03 | -6.6967E-04 |
| A10 | 1.9064E-04 | 2.4529E-03 | 2.3655E-03 | -1.3521E-03 | -1.1970E-03 | 0.0000E+00 |
| A12 | 8.1869E-05 | 7.6256E-05 | -5.3180E-04 | -1.0460E-03 | -5.1472E-04 | 0.0000E+00 |
| A14 | 0.0000E+00 | -4.3107E-05 | -1.4913E-04 | -4.2943E-04 | -3.1151E-04 | 0.0000E+00 |
| A16 | 0.0000E+00 | 2.2500E-05 | 1.1378E-04 | 1.9165E-04 | 1.2670E-04 | 0.0000E+00 |
| A18 | 0.0000E+00 | -3.1755E-05 | -8.3467E-05 | -3.6837E-05 | -1.6911E-05 | 0.0000E+00 |
| A20 | 0.0000E+00 | 0.0000E+00 | 2.2990E-05 | 2.2130E-05 | 7.5231 E-06 | 0.0000E+00 |

(continued)

| Surface number | S7 | S8 | S9 | S10 | S11 | S12 |
|---|---|---|---|---|---|---|
| K | 0.0000E+00 | 0.0000E+00 | 0.0000E+00 | 0.0000E+00 | 0.0000E+00 | 0.0000E+00 |
| A4 | 6.6364E-01 | 6.3855E-01 | -1.0560E-01 | -7.2437E-02 | -3.0055E-01 | -6.1394E-01 |
| A6 | -6.7193E-02 | 1.0218E-02 | 8.7195E-02 | 7.9023E-02 | 1.1544E-01 | 5.8522E-02 |
| A8 | 9.9461E-03 | 4.4747E-03 | -5.6943E-03 | -2.6272E-02 | -3.3525E-02 | -2.8248E-02 |
| A10 | -2.2655E-03 | -3.9058E-03 | -3.3882E-03 | -1.1345E-02 | -1.0788E-02 | -7.7491E-04 |
| A12 | 5.6800E-04 | -1.8532E-04 | -7.8198E-04 | -1.7938E-03 | -1.7702E-03 | 5.3082E-04 |
| A14 | 0.0000E+00 | 5.0182E-04 | 4.2237E-04 | 3.4868E-04 | -4.8752E-04 | 6.6679E-04 |
| A16 | 0.0000E+00 | -8.6848E-06 | -4.9396E-05 | 4.1190E-05 | -2.7555E-04 | 2.7166E-04 |
| A18 | 0.0000E+00 | -5.3886E-05 | -7.6768E-05 | -1.1532E-04 | -2.2576E-04 | 7.8622E-05 |
| A20 | 0.0000E+00 | -4.8283E-05 | -4.5345E-05 | -4.7864E-05 | -5.2237E-05 | 6.5548E-05 |
| A22 | 0.0000E+00 | 0.0000E+00 | 0.0000E+00 | 0.0000E+00 | -4.1550E-05 | 2.8211E-05 |
| A24 | 0.0000E+00 | 0.0000E+00 | 0.0000E+00 | 0.0000E+00 | -1.8608E-05 | 2.0546E-06 |
| A26 | 0.0000E+00 | 0.0000E+00 | 0.0000E+00 | 0.0000E+00 | -2.0076E-05 | -5.9206E-06 |
| A28 | 0.0000E+00 | 0.0000E+00 | 0.0000E+00 | 0.0000E+00 | 0.0000E+00 | 0.0000E+00 |
| A30 | 0.0000E+00 | 0.0000E+00 | 0.0000E+00 | 0.0000E+00 | 0.0000E+00 | 0.0000E+00 |

(a) of FIG. 2 shows the longitudinal spherical aberration curve diagram of the optical system of the first embodiment at wavelengths of 650.0000 nm, 610.000 nm, 555.0000 nm, 510.0000 nm, 470.0000 nm and 435.0000 nm. The abscissa along the X-axis represents the deviation of the focus point in mm, and the ordinate along the Y-axis direction represents the normalized field of view. The longitudinal spherical aberration curves indicate the deviation of the focus point of light of different wavelengths passing through the lenses of the optical system. It can be seen from (a) of FIG. 2 that the spherical aberration values of the optical system in the first embodiment are relatively good, indicating that the imaging quality of the optical system in this embodiment is well.

(b) of FIG. 2 also shows the astigmatism curve diagram of the optical system of the first embodiment at a wavelength of 555.0000 nm. The abscissa along the X-axis represents the deviation of the focus point in mm, and the ordinate along the Y-axis represents the image height in mm. In the astigmatism curve diagram, T represents the curvature of the imaging surface IMG in the tangential direction, and S represents the curvature of the imaging surface IMG in the sagittal direction. It can be seen from (b) of FIG. 2 that the astigmatism of the optical system has been well compensated.

(c) of FIG. 2 also shows the distortion curve diagram of the optical system of the first embodiment at a wavelength of 555.0000 nm. The abscissa along the X-axis represents the distortion, and the ordinate along the Y-axis represents the semi-image height in mm. The distortion curve indicates the distortion values corresponding to different field of view angles. It can be seen from (c) of FIG. 2 that the distortion of the optical system has been well corrected at a wavelength of 555.0000 nm.

From (a), (b) and (c) of FIG. 2, it can be seen that the optical system of this embodiment has small aberration, good imaging quality, and good imaging quality.

Second embodiment

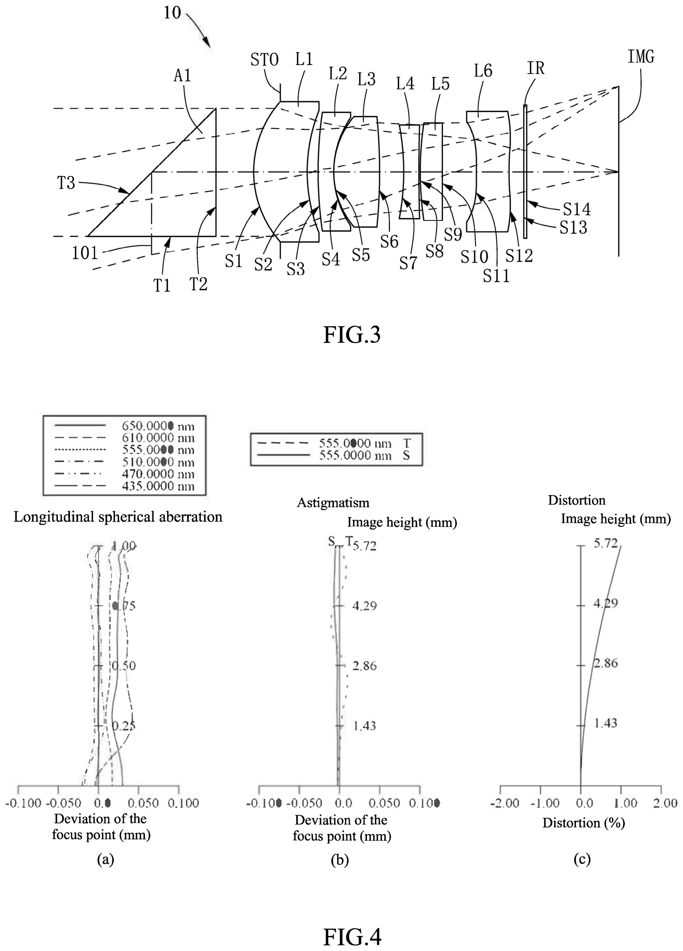

Referring to FIG. 3 and FIG. 4, a structure of an optical system 10 of the illustrated embodiment differs from that of the first embodiment in that the prism A1 is a triangular prism and includes an object side surface T1, an imaging side surface T2, and a reflective surface T3.

The parameters of the optical system 10 of the illustrated embodiment are given in Table 3. The meanings of each parameter are the same as those in the first embodiment and will not be repeated here.

Table 3

| | | | | Second embodiment | | | | |
| --- | --- | --- | --- | --- | --- | --- | --- | --- |
| | | | f=24.84mm, FNO=2.58, FOV=25.69°, TTL=24.4873mm. ImgH=6.02mm | | | | | |
| Surface numeral | Name | Surface type | Y radius | Thickness (mm) | Material (mm) | Refractive index | Abbe number | Effective focal length (mm) |
| Object side | Object side | sphere | Infinity | Infinity | | | | |
| | Prism | sphere | Infinity | 8.8 | Glass | | | |
| | | sphere | Infinity | 2.6847318 | | | | |
| STO | Aperture | sphere | Infinity | -1.7563 | | | | |
| S1 | First lens L1 | asphere | 7.3153 | 3.6244 | Plastic | 1.535 | 55.68 | 29.78 |
| S2 | | asphere | 11.1593 | 0.7190 | | | | |
| S3 | Second lens L2 | asphere | 12.8920 | 1.0509 | Plastic | 1.636 | 23.97 | -13.45 |
| S4 | | asphere | 4.9988 | 0.0414 | | | | |
| S5 | Third lens L3 | asphere | 5.6292 | 3.0546 | Plastic | 1.535 | 55.68 | 9.62 |
| S6 | | asphere | -50.6442 | 1.5584 | | | | |
| S7 | Fourth lens L4 | asphere | -13.2217 | 1.0592 | Plastic | 1.544 | 55.93 | -25.55 |
| S8 | | asphere | -260.0198 | 0.0977 | | | | |
| S9 | Fifth lens L5 | asphere | 10.0612 | 1.4920 | Plastic | 1.661 | 20.37 | 28.63 |
| S10 | | asphere | 20.0198 | 2.3372 | | | | |
| S11 | Sixth lens L6 | asphere | -52.6279 | 2.1614 | Plastic | 1.535 | 55.68 | -23.16 |
| S12 | | asphere | 16.4976 | 1.0000 | | | | |
| S13 | IR | sphere | Infinity | 0.2100 | Glass | 1.517 | 64.17 | |
| S14 | | sphere | Infinity | 6.0811 | | | | |
| IMG | Image plane | sphere | Infinity | 0.0000 | | | | |
| | | | Reference wavelength: 555nm | | | | | |

Table 4 shows the high-order term coefficients that can be used for the aspheric surfaces of the optical system in the second embodiment. The aspheric surface shapes can be defined by the formula given in the first embodiment.

Table 4

| | | | Second embodiment | | | |
| --- | --- | --- | --- | --- | --- | --- |
| | | | Aspheric coefficient | | | |
| Surface number | S1 | S2 | S3 | S4 | S5 | S6 |
| K | -3.2684E+00 | -3.9044E+00 | -6.8111E-02 | -4.2444E+00 | 1.3000E-01 | -3.8522E+00 |
| A4 | 9.7014E-04 | -2.0599E-03 | -7.2771E-03 | -4.7089E-03 | -2.5225E-03 | 1.4197E-03 |
| A6 | -7.4178E-06 | 4.6044E-04 | 1.2747E-03 | 4.0173E-04 | -8.0354E-04 | -2.8144E-04 |
| A8 | 3.8473E-07 | -5.7328E-05 | -1.5328E-04 | 2.4572E-04 | 4.9435E-04 | -1.7992E-05 |
| A10 | -5.6850E-08 | 5.4899E-06 | 1.2440E-05 | -7.8996E-05 | -1.1704E-04 | 1.7543E-05 |
| A12 | 4.7020E-09 | -4.0314E-07 | -6.4385E-07 | 1.1154E-05 | 1.5374E-05 | -3.9829E-06 |
| A14 | -1.7243E-10 | 2.2402E-08 | 2.0757E-08 | -8.6489E-07 | -1.1931E-06 | 4.8126E-07 |

(continued)

| Second embodiment | | | | | |
|---|---|---|---|---|---|
| Aspheric coefficient | | | | | |
| Surface number | S1 | S2 | S3 | S4 | S5 | S6 |
| A16 | 2.3118E-12 | -7.8219E-10 | -3.9342E-10 | 3.7308E-08 | 5.4224E-08 | -3.2863E-08 |
| A18 | 0.0000E+00 | 1.1815E-11 | 2.6428E-12 | -8.1565E-10 | -1.3298E-09 | 1.1958E-09 |
| A20 | 0.0000E+00 | 0.0000E+00 | 3.4187E-14 | 6.5943E-12 | 1.3511E-11 | -1.8066E-11 |
| Surface number | S7 | S8 | S9 | S10 | S11 | S12 |
| K | 9.1731E+00 | 9.9000E+01 | 3.7746E-02 | -3.9360E-01 | -8.7144E+00 | 2.5885E-01 |
| A4 | 8.6434E-03 | -2.4059E-04 | -1.1210E-02 | -7.4929E-03 | -6.3133E-03 | -3.9700E-03 |
| A6 | -1.1532E-03 | 5.4912E-03 | 5.9648E-03 | 1.6098E-03 | 5.8493E-04 | 2.2376E-04 |
| A8 | -1.9767E-04 | -3.4445E-03 | -2.8006E-03 | -4.5683E-04 | -1.3507E-04 | 2.1931E-05 |
| A10 | 1.3163E-04 | 1.1148E-03 | 8.4365E-04 | 1.1620E-04 | -6.8689E-06 | -3.1088E-05 |
| A12 | -3.1510E-05 | -2.1918E-04 | -1.6003E-04 | -2.0344E-05 | 3.4795E-05 | 1.4581E-05 |
| A14 | 4.2335E-06 | 2.6850E-05 | 1.9116E-05 | 2.3266E-06 | -1.9582E-05 | -4.2006E-06 |
| A16 | -3.2883E-07 | -1.9940E-06 | -1.3923E-06 | -1.6603E-07 | 6.2528E-06 | 8.1763E-07 |
| A18 | 1.3762E-08 | 8.1979E-08 | 5.6319E-08 | 6.6555E-09 | -1.3174E-06 | -1.1150E-07 |
| A20 | -2.4042E-10 | -1.4296E-09 | -9.6757E-10 | -1.1359E-10 | 1.9118E-07 | 1.0788E-08 |
| A22 | 0.0000E+00 | 0.0000E+00 | 0.0000E+00 | 0.0000E+00 | -1.9249E-08 | -7.3712E-10 |
| A24 | 0.0000E+00 | 0.0000E+00 | 0.0000E+00 | 0.0000E+00 | 1.3221E-09 | 3.4779E-11 |
| A26 | 0.0000E+00 | 0.0000E+00 | 0.0000E+00 | 0.0000E+00 | -5.9117E-11 | -1.0778E-12 |
| A28 | 0.0000E+00 | 0.0000E+00 | 0.0000E+00 | 0.0000E+00 | 1.5513E-12 | 1.9737E-14 |
| A30 | 0.0000E+00 | 0.0000E+00 | 0.0000E+00 | 0.0000E+00 | -1.8124E-14 | -1.6178E-16 |

FIG. 4 shows the longitudinal spherical aberration curve diagram, astigmatism curve diagram and distortion curve diagram of the optical system of the second embodiment. From the aberration diagrams of FIG. 4, it can be seen that the longitudinal spherical aberration, field curvature and distortion of the optical system are well controlled, thus the optical system of this embodiment has good imaging quality.

Third embodiment

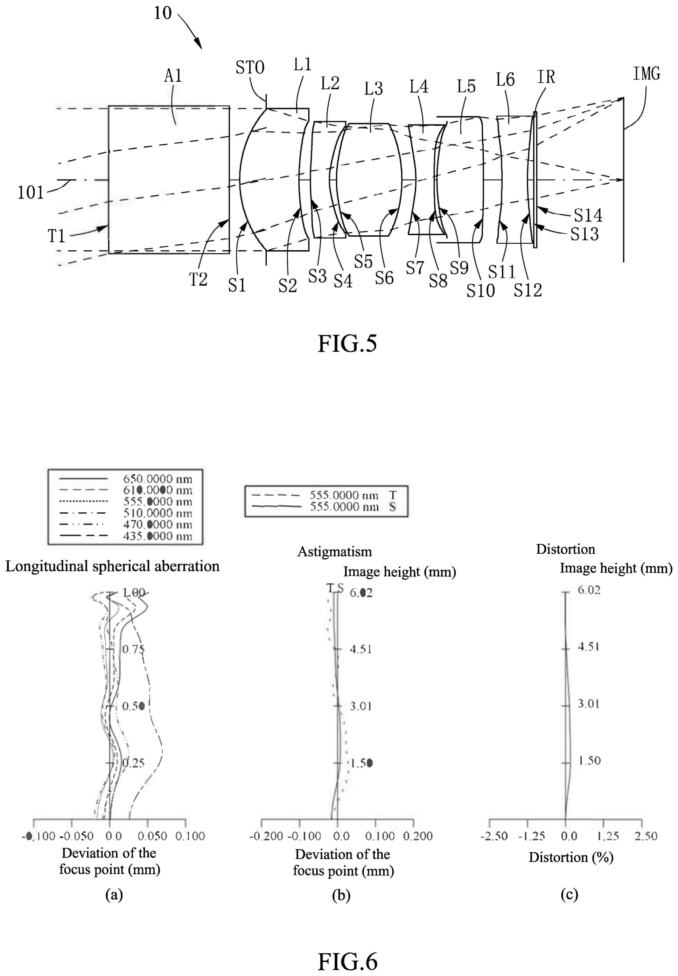

Referring to FIG. 5 and FIG. 6, a structure of an optical system 10 of the illustrated embodiment differs from that of the first embodiment in that the object side surface S7 of the fourth lens L4 is concave near the periphery of the fourth lens L4.

The parameters of the optical system 10 of the illustrated embodiment are given in Table 5. The meanings of each parameter are the same as those in the first embodiment and will not be repeated here.

Table 5

| Third embodiment | | | | | | | | |
|---|---|---|---|---|---|---|---|---|
| f=25.17mm, FNO=2.4, FOV=26.87°, TTL=28.0mm, ImgH=6.02mm | | | | | | | | |
| Surface numeral | Name | Surface type | Y radius | Thickness (mm) | Material (mm) | Refractive index | Abbe number | Effective focal length (mm) |
| Object side | Object side | sphere | Infinity | Infinity | | | | |

(continued)

| Surface numeral | Name | Surface type | Y radius | Thickness (mm) | Material (mm) | Refractive index | Abbe number | Effective focal length (mm) |
|---|---|---|---|---|---|---|---|---|
| | | | | Third embodiment | | | | |
| | | | f=25.17mm, FNO=2.4, FOV=26.87°, TTL=28.0mm, ImgH=6.02mm | | | | | |
| | Prism | sphere | Infinity | 8.8 | Glass | | | |
| | | sphere | Infinity | 2.6847318 | | | | |
| STO | Aperture | sphere | Infinity | -1.9318 | | | | |
| S1 | First lens L1 | asphere | 8.0433 | 4.3260 | Plastic | 1.54 | 55.68 | 27.10 |
| S2 | | asphere | 14.6187 | 0.8272 | | | | |
| S3 | Second lens L2 | asphere | 12.8843 | 1.3921 | Plastic | 1.64 | 23.97 | -13.62 |
| S4 | | asphere | 4.9816 | 0.5044 | | | | |
| S5 | Third lens L3 | asphere | 7.6554 | 4.7779 | Plastic | 1.54 | 55.68 | 8.81 |
| S6 | | asphere | -9.6510 | 1.0262 | | | | |
| S7 | Fourth lens L4 | asphere | -7.2808 | 1.3353 | Plastic | 1.55 | 55.93 | -13.10 |
| S8 | | asphere | 433.3656 | 0.1993 | | | | |
| S9 | Fifth lens L5 | asphere | 11.8966 | 3.3842 | Plastic | 1.59 | 28.39 | 20.53 |
| S10 | | asphere | 511.7454 | 1.3533 | | | | |
| S11 | Sixth lens L6 | asphere | -74.2003 | 1.8535 | Plastic | 1.54 | 55.68 | -22.39 |
| S12 | | asphere | 14.4628 | 0.4672 | | | | |
| S13 | IR | sphere | Infinity | 0.2100 | Glass | 1.517 | 64.17 | |
| S14 | | sphere | Infinity | 6.3549 | | | | |
| IMG | Image plane | sphere | Infinity | -0.0121 | | | | |
| | | | Reference wavelength: 555nm | | | | | |

Table 6 shows the high-order term coefficients that can be used for the aspheric surfaces of the optical system in the third embodiment. The aspheric surface shapes can be defined by the formula given in the first embodiment.

Table 6

| Surface number | S1 | S2 | S3 | S4 | S5 | S6 |
|---|---|---|---|---|---|---|
| | | | Third embodiment | | | |
| | | | Aspheric coefficient | | | |
| K | -3.3936E+00 | -3.2571E-01 | 1.3011E-02 | -5.2035E+00 | 6.0145E-02 | -9.8765E+00 |
| A4 | 4.9880E-01 | -4.5207E-02 | -5.6286E-01 | -3.4774E-02 | -3.7772E-01 | -2.0813E-01 |
| A6 | -1.5799E-03 | 7.6841E-02 | 1.5808E-01 | 1.2260E-01 | 8.6065E-02 | 1.1798E-03 |
| A8 | 3.8312E-03 | 6.4345E-03 | -1.8925E-02 | -4.9429E-03 | 4.0753E-03 | -1.1190E-03 |
| A10 | 3.1255E-04 | 2.2085E-03 | 2.3781E-03 | -1.1101E-03 | -1.3760E-03 | -6.9678E-05 |
| A12 | 9.6246E-05 | -1.0430E-05 | -4.6202E-04 | -8.6540E-04 | -6.7178E-04 | -7.2569E-05 |
| A14 | -6.6790E-05 | -2.3051E-04 | -2.2038E-04 | -3.4438E-04 | -2.6478E-04 | -4.2452E-05 |
| A16 | -1.9103E-05 | 8.0142E-06 | 1.4754E-04 | 1.3977E-04 | 6.1182E-05 | 4.7662E-06 |

(continued)

| Third embodiment | | | | | | |
|---|---|---|---|---|---|---|
| Aspheric coefficient | | | | | | |
| Surface number | S1 | S2 | S3 | S4 | S5 | S6 |
| A18 | -1.6582E-05 | -4.6024E-05 | -8.8052E-05 | -6.9273E-05 | -4.6499E-05 | -2.1852E-06 |
| A20 | 8.5730E-06 | -4.2687E-06 | 7.5424E-06 | -6.0325E-07 | -2.2811E-05 | -1.2640E-08 |
| Surface number | S7 | S8 | S9 | S10 | S11 | S12 |
| K | -7.6037E-02 | 2.8287E+01 | -9.8912E-02 | 1.4311E+01 | -9.8927E+01 | 2.3890E-01 |
| A4 | 6.6102E-01 | 6.2677E-01 | -1.0660E-01 | -1.5400E-01 | -2.7953E-01 | -6.1888E-01 |
| A6 | -7.2650E-02 | 1.7812E-02 | 7.9434E-02 | 4.1167E-02 | 1.1360E-01 | 1.0491E-01 |
| A8 | 2.4759E-04 | 1.6239E-03 | -3.5126E-03 | -2.823 1E-02 | -3.9509E-02 | -3.5146E-02 |
| A10 | -4.0810E-03 | -3.2756E-03 | -3.7357E-03 | -1.2246E-02 | -1.4905E-02 | -4.3903E-03 |
| A12 | -1.2128E-03 | -5.3738E-04 | -7.1276E-04 | -1.1103E-03 | -2.7707E-03 | 9.0216E-04 |
| A14 | -7.3448E-04 | -1.9292E-04 | -9.0462E-05 | 5.7903E-04 | -1.5612E-03 | 4.4324E-04 |
| A16 | -3.0255E-04 | 4.6018E-04 | 2.5922E-04 | 3.6814E-04 | -1.1329E-04 | 1.4220E-03 |
| A18 | -2.0176E-04 | -5.7151E-05 | -3.0221 E-04 | -5.2606E-06 | -5.3347E-05 | 3.4881 E-04 |
| A20 | -1.4798E-04 | -1.0990E-04 | -1.9046E-04 | -7.5872E-06 | 2.5293E-04 | 2.4897E-04 |
| A22 | 0.0000E+00 | 0.0000E+00 | 0.0000E+00 | 0.0000E+00 | 6.1406E-05 | -4.8379E-04 |
| A24 | 0.0000E+00 | 0.0000E+00 | 0.0000E+00 | 0.0000E+00 | 2.2703E-05 | -5.1369E-04 |
| A26 | 0.0000E+00 | 0.0000E+00 | 0.0000E+00 | 0.0000E+00 | -3.9138E-05 | -6.0052E-04 |
| A28 | 0.0000E+00 | 0.0000E+00 | 0.0000E+00 | 0.0000E+00 | -9.3847E-06 | -3.1265E-04 |
| A30 | 0.0000E+00 | 0.0000E+00 | 0.0000E+00 | 0.0000E+00 | -7.4449E-07 | -1.5273E-04 |

FIG. 6 shows the longitudinal spherical aberration curve diagram, astigmatism curve diagram and distortion curve diagram of the optical system of the third embodiment. From the aberration diagrams of FIG. 6, it can be seen that the longitudinal spherical aberration, field curvature and distortion of the optical system are well controlled, thus the optical system of this embodiment has good imaging quality.

Fourth embodiment

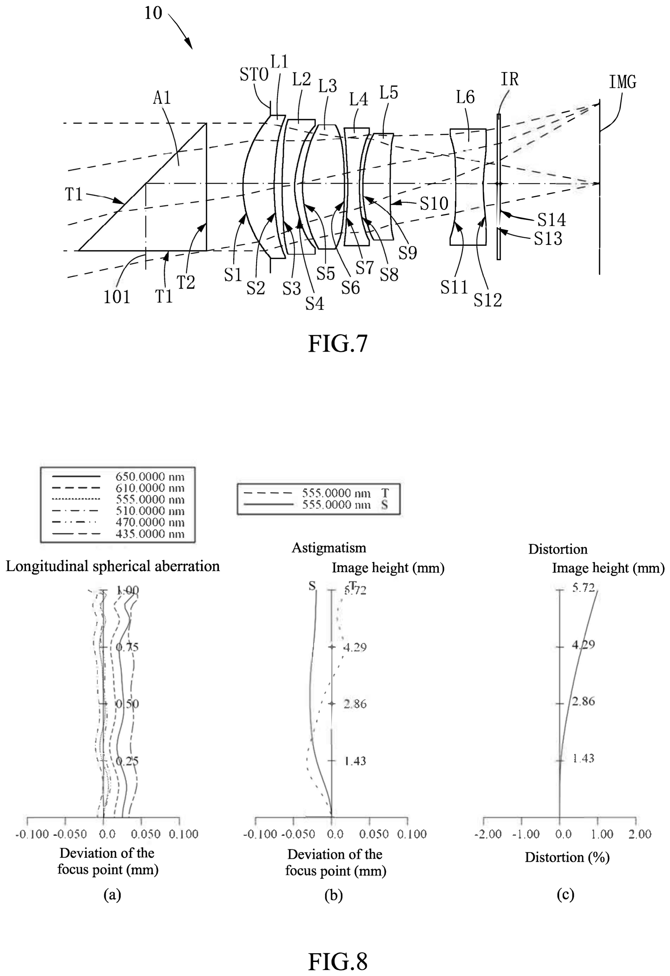

Referring to FIG. 7 and FIG. 8, a structure of an optical system 10 of the illustrated embodiment differs from that of the first embodiment in that the prism A1 is a triangular prism and includes an object side surface T1, an imaging side surface T2, and a reflective surface T3; the object side surface S11 of the sixth lens L6 is convex near the optical axis, and the object side surface S11 of the sixth lens L6 is convex near the periphery of the sixth lens L6.

The parameters of the optical system 10 of the illustrated embodiment are given in Table 7. The meanings of each parameter are the same as those in the first embodiment and will not be repeated here.

Table 7

| Fourth embodiment | | | | | | | |
|---|---|---|---|---|---|---|---|
| f=25.09mm, FNO=2.56, FOV=25.44°, TTL=24.5mm, ImgH=5.72mm | | | | | | | |
| Surface numeral | Name | Surface type | Y radius | Thickness (mm) | Material (mm) | Refractive index | Abbe number | Effective focal length (mm) |
| Object side | Object side | sphere | Infinity | Infinity | | | | |

(continued)

| Fourth embodiment | | | | | | | | |
|---|---|---|---|---|---|---|---|---|
| f=25.09mm, FNO=2.56, FOV=25.44°, TTL=24.5mm, ImgH=5.72mm | | | | | | | | |
| Surface numeral | Name | Surface type | Y radius | Thickness (mm) | Material (mm) | Refractive index | Abbe number | Effective focal length (mm) |
| | Prism | sphere | Infinity | 8.8 | Glass | | | |
| | | sphere | Infinity | 2.6847318 | | | | |
| STO | Aperture | sphere | Infinity | -1.8872 | | | | |
| S1 | First lens L1 | asphere | 7.1424 | 2.1487 | Plastic | 1.535 | 55.68 | 21.04 |
| S2 | | asphere | 17.4034 | 0.5262 | | | | |
| S3 | Second lens L2 | asphere | 12.6836 | 0.8741 | Plastic | 1.636 | 23.97 | -13.66 |
| S4 | | asphere | 5.0373 | 0.5453 | | | | |
| S5 | Third lens L3 | asphere | 6.9103 | 2.8702 | Plastic | 1.535 | 55.68 | 11.19 |
| S6 | | asphere | -39.2474 | 0.2410 | | | | |
| S7 | Fourth lens L4 | asphere | -12.0316 | 0.8000 | Plastic | 1.544 | 55.93 | -16.03 |
| S8 | | asphere | 32.9098 | 0.2132 | | | | |
| S9 | Fifth lens L5 | asphere | 8.9357 | 1.8798 | Plastic | 1.588 | 28.39 | 19.63 |
| S10 | | asphere | 35.7344 | 4.4976 | | | | |
| S11 | Sixth lens L6 | asphere | 77.6796 | 1.9062 | Plastic | 1.535 | 55.68 | -23.23 |
| S12 | | asphere | 10.6482 | 0.9642 | | | | |
| S13 | IR | sphere | Infinity | 0.2100 | Glass | 1.517 | 64.17 | |
| S14 | | sphere | Infinity | 6.8236 | | | | |
| IMG | Image plane | sphere | Infinity | 0.0000 | | | | |
| Reference wavelength: 555nm | | | | | | | | |

Table 8 shows the high-order term coefficients that can be used for the aspheric surfaces of the optical system in the fourth embodiment. The aspheric surface shapes can be defined by the formula given in the first embodiment.

Table 8

| Fourth embodiment | | | | | | |
|---|---|---|---|---|---|---|
| Aspheric coefficient | | | | | | |
| Surface number | S1 | S2 | S3 | S4 | S5 | S6 |
| K | -2.9544E+00 | -6.9593E+00 | -2.3923E-02 | -5.5441E+00 | -1.0887E-02 | 7.7614E+00 |
| A4 | 1.0906E-03 | -5.4412E-04 | -6.8923E-03 | -5.9092E-03 | -4.8637E-03 | -1.9083E-03 |
| A6 | -3.1031E-05 | -1.3368E-04 | 7.5469E-04 | 1.4855E-03 | 9.0422E-04 | 3.8499E-04 |
| A8 | 2.6056E-06 | 4.8512E-05 | -5.6044E-05 | -2.7741 E-04 | -2.0255E-04 | -5.4242E-05 |
| A10 | -7.5515E-08 | -6.1070E-06 | 4.6771 E-06 | 4.1314E-05 | 3.4349E-05 | 4.0025E-06 |
| A12 | -4.0509E-09 | 4.4715E-07 | -4.1107E-07 | -3.9298E-06 | -3.5621E-06 | -1.8724E-07 |
| A14 | 3.1765E-10 | -1.9791E-08 | 2.7106E-08 | 2.2173E-07 | 2.1923E-07 | 5.4110E-09 |
| A16 | -5.9528E-12 | 4.8962E-10 | -1.1347E-09 | -6.8067E-09 | -7.7071E-09 | -7.5043E-11 |

(continued)

| Fourth embodiment | | | | | | |
|---|---|---|---|---|---|---|
| Aspheric coefficient | | | | | | |
| Surface number | S1 | S2 | S3 | S4 | S5 | S6 |
| A18 | 0.0000E+00 | -5.1993E-12 | 2.6786E-11 | 9.0551E-11 | 1.3890E-10 | 0.0000E+00 |
| A20 | 0.0000E+00 | 0.0000E+00 | -2.7161E-13 | -1.2431E-13 | -9.5051E-13 | 0.0000E+00 |
| Surface number | S7 | S8 | S9 | S10 | S11 | S12 |
| K | 3.0157E+00 | -4.4531 E+00 | 2.2819E-02 | 7.0421E+00 | 9.9000E+01 | -1.2686E+01 |
| A4 | 6.8650E-03 | 4.4760E-03 | -4.4377E-03 | -2.1541E-03 | -3.8286E-03 | -2.5103E-03 |
| A6 | -5.2703E-04 | 1.3417E-03 | 2.0524E-03 | 5.4791E-04 | -4.6348E-04 | -9.9312E-05 |
| A8 | -2.1403E-05 | -7.7409E-04 | -7.0778E-04 | -1.4729E-04 | 4.3792E-04 | 1.3088E-04 |
| A10 | 8.1919E-06 | 1.7546E-04 | 1.5217E-04 | 3.5215E-05 | -2.0536E-04 | -5.2485E-05 |
| A12 | -7.4165E-07 | -2.3078E-05 | -2.0380E-05 | -5.4841E-06 | 6.4233E-05 | 1.3717E-05 |
| A14 | 3.0829E-08 | 1.9101E-06 | 1.7425E-06 | 5.4834E-07 | -1.3837E-05 | -2.4597E-06 |
| A16 | -4.9052E-10 | -9.9321E-08 | -9.3440E-08 | -3.4138E-08 | 2.0761E-06 | 3.0644E-07 |
| A18 | 0.0000E+00 | 3.0026E-09 | 2.8900E-09 | 1.2199E-09 | -2.1631E-07 | -2.6448E-08 |
| A20 | 0.0000E+00 | -4.0616E-11 | -3.9676E-11 | -1.9420E-11 | 1.5332E-08 | 1.5497E-09 |
| A22 | 0.0000E+00 | 0.0000E+00 | 0.0000E+00 | 0.0000E+00 | -7.0476E-10 | -5.8780E-11 |
| A24 | 0.0000E+00 | 0.0000E+00 | 0.0000E+00 | 0.0000E+00 | 1.8940E-11 | 1.3011E-12 |
| A26 | 0.0000E+00 | 0.0000E+00 | 0.0000E+00 | 0.0000E+00 | -2.2584E-13 | -1.2755E-14 |
| A28 | 0.0000E+00 | 0.0000E+00 | 0.0000E+00 | 0.0000E+00 | 0.0000E+00 | 0.0000E+00 |
| A30 | 0.0000E+00 | 0.0000E+00 | 0.0000E+00 | 0.0000E+00 | 0.0000E+00 | 0.0000E+00 |

FIG. 8 shows the longitudinal spherical aberration curve diagram, astigmatism curve diagram and distortion curve diagram of the optical system of the fourth embodiment. From the aberration diagrams of FIG. 8, it can be seen that the longitudinal spherical aberration, field curvature and distortion of the optical system are well controlled, thus the optical system of this embodiment has good imaging quality.

Fifth embodiment

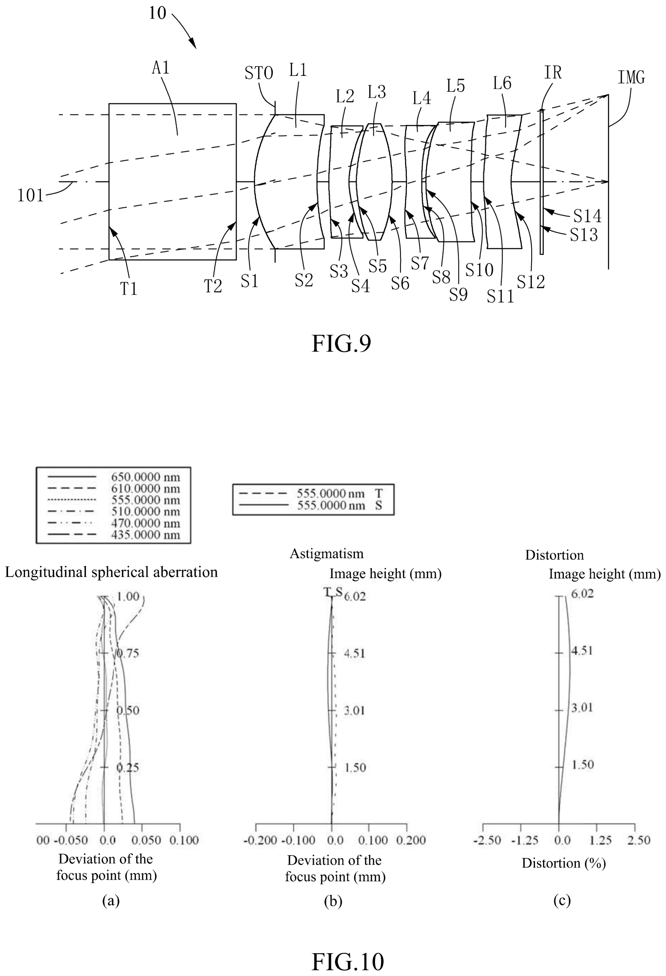

Referring to FIG. 9 and FIG. 10, a structure of an optical system 10 of the illustrated embodiment differs from that of the first embodiment in that the object side surface S11 of the sixth lens L6 is convex near the optical axis, and the object side surface S11 of the sixth lens L6 is convex near the periphery of the sixth lens L6.

The parameters of the optical system 10 of the illustrated embodiment are given in Table 9. The meanings of each parameter are the same as those in the first embodiment and will not be repeated here.

Table 9

| Fifth embodiment | | | | | | | | |
|---|---|---|---|---|---|---|---|---|
| f=21.29mm, FNO=2.3, FOV=31.51°, TTL=24.5mm, ImgH=6.02mm | | | | | | | | |
| Surface numeral | Name | Surface type | Y radius | Thickness (mm) | Material (mm) | Refractive index | Abbe number | Effective focal length (mm) |
| Object side | Object side | sphere | Infinity | Infinity | | | | |

(continued)

| Surface numeral | Name | Surface type | Y radius | Thickness (mm) | Material (mm) | Refractive index | Abbe number | Effective focal length (mm) |
|---|---|---|---|---|---|---|---|---|
| | Prism | sphere | Infinity | 8.8 | Glass | | | |
| | | sphere | Infinity | 2.6847318 | | | | |
| STO | Aperture | sphere | Infinity | -1.4319 | | | | |
| S1 | First lens L1 | asphere | 8.0433 | 4.3260 | Plastic | 1.54 | 55.68 | 27.10 |
| S2 | | asphere | 14.6187 | 0.8272 | | | | |
| S3 | Second lens L2 | asphere | 12.8843 | 1.3921 | Plastic | 1.64 | 23.97 | -13.62 |
| S4 | | asphere | 4.9816 | 0.5105 | | | | |
| S5 | Third lens L3 | asphere | 7.6845 | 2.4656 | Plastic | 1.54 | 55.68 | 9.04 |
| S6 | | asphere | -11.6687 | 0.9892 | | | | |
| S7 | Fourth lens L4 | asphere | -12.3282 | 1.0707 | Plastic | 1.55 | 55.93 | -14.95 |
| S8 | | asphere | 24.9185 | 0.2753 | | | | |
| S9 | Fifth lens L5 | asphere | 9.2984 | 3.1140 | Plastic | 1.59 | 28.39 | 20.46 |
| S10 | | asphere | 35.0849 | 0.8819 | | | | |
| S11 | Sixth lens L6 | asphere | 11.5323 | 1.9080 | Plastic | 1.54 | 55.68 | -31.07 |
| S12 | | asphere | 6.4226 | 2.0129 | | | | |
| S13 | IR | sphere | Infinity | 0.2100 | Glass | 1.517 | 64.17 | |
| S14 | | sphere | Infinity | 4.5279 | | | | |
| IMG | Image plane | sphere | Infinity | -0.0121 | | | | |
| Reference wavelength: 555nm | | | | | | | | |

**Fifth embodiment**

f=21.29mm, FNO=2.3, FOV=31.51°, TTL=24.5mm, ImgH=6.02mm

Table 10 shows the high-order term coefficients that can be used for the aspheric surfaces of the optical system in the fifth embodiment. The aspheric surface shapes can be defined by the formula given in the first embodiment.

Table 10

| Surface number | S1 | S2 | S3 | S4 | S5 | S6 |
|---|---|---|---|---|---|---|
| K | -3.6392E+00 | -3.9054E-01 | -4.2357E-01 | -5.1362E+00 | 1.5158E-02 | -1.0958E+01 |
| A4 | 4.7427E-01 | -4.6337E-02 | -5.7208E-01 | -3.7655E-02 | -3.8211E-01 | -2.0247E-01 |
| A6 | -1.3576E-02 | 8.3126E-02 | 1.5841E-01 | 1.1534E-01 | 8.5729E-02 | 7.1428E-04 |
| A8 | 2.7091E-03 | 6.3550E-03 | -1.8440E-02 | -8.3734E-03 | 2.2914E-03 | -1.5409E-04 |
| A10 | 3.8237E-04 | 2.6055E-03 | 1.9162E-03 | -2.5069E-03 | -1.9905E-03 | -1.2171E-06 |
| A12 | 2.4087E-04 | 1.0267E-04 | -4.5554E-04 | -9.4116E-04 | -5.7070E-04 | -4.0253E-05 |
| A14 | 2.9527E-05 | -6.1689E-05 | -1.3120E-04 | -2.1706E-04 | -2.3481E-04 | 6.9612E-06 |
| A16 | -4.7428E-06 | -1.2609E-04 | -4.5531E-07 | 2.6782E-04 | 1.9429E-04 | 2.1840E-05 |

*Fifth embodiment*

*Aspheric coefficient*

(continued)

| Fifth embodiment | | | | | |
|---|---|---|---|---|---|
| Aspheric coefficient | | | | | |
| Surface number | S1 | S2 | S3 | S4 | S5 | S6 |
| A18 | 2.1890E-06 | -7.6042E-05 | -4.7115E-05 | 3.6230E-07 | 5.6852E-07 | 3.1599E-06 |
| A20 | 1.1795E-05 | 1.3861E-06 | 5.5330E-05 | 5.3864E-05 | 1.5530E-05 | 1.5074E-06 |
| Surface number | S7 | S8 | S9 | S10 | S11 | S12 |
| K | -4.0680E-01 | -2.4756E+00 | -5.1298E-01 | 3.4659E+01 | -3.0745E+01 | -4.2938E+00 |
| A4 | 6.7337E-01 | 6.3445E-01 | -1.2258E-01 | -7.3049E-02 | -3.2773E-01 | -7.1968E-0 1 |
| A6 | -6.9024E-02 | 1.0775E-02 | 8.2981E-02 | 6.7425E-02 | 1.2280E-01 | 9.7226E-02 |
| A8 | 7.4691E-03 | 2.5683E-03 | -7.4264E-03 | -2.5620E-02 | -2.4545E-02 | -3.0684E-02 |
| A10 | -2.8281E-03 | -3.7173E-03 | -3.6051E-03 | -1.0971E-02 | -1.8079E-02 | -8.1658E-03 |
| A12 | 1.5427E-04 | -8.1700E-04 | -1.5183E-03 | -3.0953E-04 | -2.6488E-03 | -9.1989E-04 |
| A14 | 4.2958E-05 | -1.1520E-04 | -4.1822E-04 | 1.0980E-03 | -2.0678E-03 | 9.4068E-04 |
| A16 | 1.2799E-06 | 5.3577E-05 | 1.0439E-04 | 1.4003E-03 | -2.5970E-05 | 1.9784E-03 |
| A18 | 5.2236E-06 | 4.9686E-05 | 3.8560E-05 | 4.4694E-04 | -5.7644E-05 | 1.0917E-03 |
| A20 | -2.0104E-05 | -8.1578E-05 | -8.0086E-05 | 5.5138E-05 | 2.7263E-05 | 5.7168E-04 |
| A22 | 0.0000E+00 | 0.0000E+00 | 0.0000E+00 | 0.0000E+00 | 1.3651E-04 | 2.0499E-04 |
| A24 | 0.0000E+00 | 0.0000E+00 | 0.0000E+00 | 0.0000E+00 | 8.5795E-05 | -7.0899E-06 |
| A26 | 0.0000E+00 | 0.0000E+00 | 0.0000E+00 | 0.0000E+00 | 5.5498E-05 | -6.5448E-05 |
| A28 | 0.0000E+00 | 0.0000E+00 | 0.0000E+00 | 0.0000E+00 | 1.8010E-05 | -5.9134E-05 |
| A30 | 0.0000E+00 | 0.0000E+00 | 0.0000E+00 | 0.0000E+00 | 6.7695E-06 | -2.5105E-05 |

FIG. 10 shows the longitudinal spherical aberration curve diagram, astigmatism curve diagram and distortion curve diagram of the optical system of the fifth embodiment. From the aberration diagrams of FIG. 10, it can be seen that the longitudinal spherical aberration, field curvature and distortion of the optical system are well controlled, thus the optical system of this embodiment has good imaging quality.

Sixth embodiment

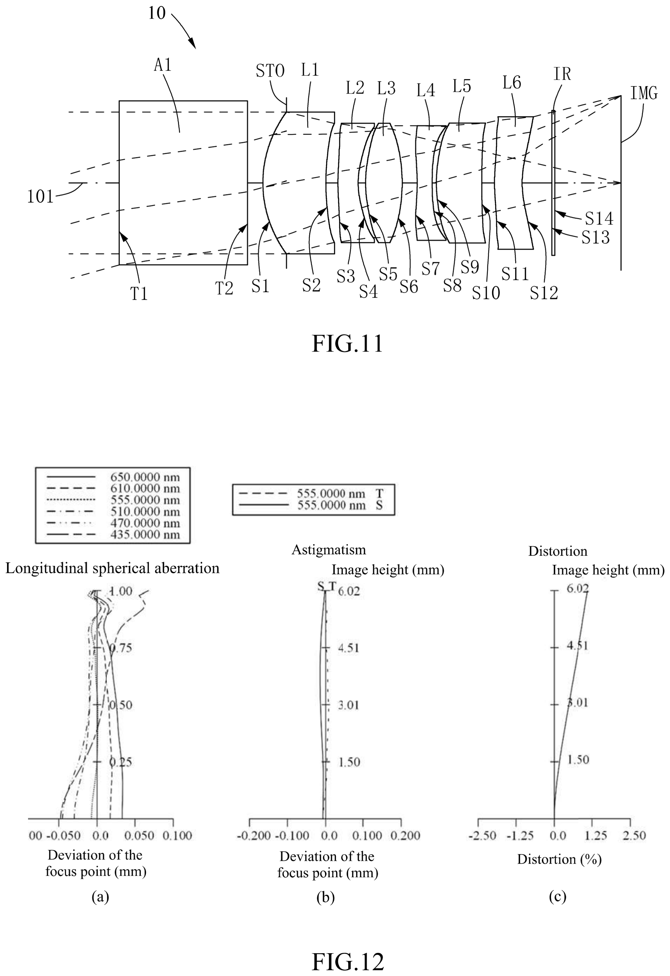

Referring to FIG. 11 and FIG. 12, a structure of an optical system 10 of the illustrated embodiment differs from that of the first embodiment in that the object side surface S11 of the sixth lens L6 is convex near the optical axis, and the object side surface S11 of the sixth lens L6 is convex near the periphery of the sixth lens L6.

The parameters of the optical system 10 of the illustrated embodiment are given in Table 11. The meanings of each parameter are the same as those in the first embodiment and will not be repeated here.

Table 11

| Sixth embodiment | | | | | | | | |
|---|---|---|---|---|---|---|---|---|
| f=21.54mm, FNO=2.2, FOV=30.89°, TTL=24.6mm, ImgH=6.02mm | | | | | | | | |
| Surface numeral | Name | Surface type | Y radius | Thickness (mm) | Material (mm) | Refractive index | Abbe number | Effective focal length (mm) |
| Object side | Object side | sphere | Infinity | Infinity | | | | |

(continued)

| Sixth embodiment | | | | | | | | |
|---|---|---|---|---|---|---|---|---|
| f=21.54mm, FNO=2.2, FOV=30.89°, TTL=24.6mm, ImgH=6.02mm | | | | | | | | |
| Surface numeral | Name | Surface type | Y radius | Thickness (mm) | Material (mm) | Refractive index | Abbe number | Effective focal length (mm) |
| | Prism | sphere | Infinity | 8.80000 | Glass | | | |
| | | sphere | Infinity | 2.68473 | | | | |
| STO | Aperture | sphere | Infinity | -1.61826 | | | | |
| S1 | First lens L1 | asphere | 8.0433 | 4.32595 | Plastic | 1.54 | 55.68 | 27.10 |
| S2 | | asphere | 14.6187 | 0.82720 | | | | |
| S3 | Second lens L2 | asphere | 12.8843 | 1.39214 | Plastic | 1.64 | 23.97 | -13.62 |
| S4 | | asphere | 4.9816 | 0.50904 | | | | |
| S5 | Third lens L3 | asphere | 7.6825 | 2.51473 | Plastic | 1.54 | 55.68 | 9.02 |
| S6 | | asphere | -11.5999 | 1.03310 | | | | |
| S7 | Fourth lens L4 | asphere | -12.3112 | 1.02819 | Plastic | 1.55 | 55.93 | -14.89 |
| S8 | | asphere | 24.6545 | 0.28760 | | | | |
| S9 | Fifth lens L5 | asphere | 9.2945 | 3.11698 | Plastic | 1.59 | 28.39 | 20.53 |
| S10 | | asphere | 34.6187 | 0.87745 | | | | |
| S11 | Sixth lens L6 | asphere | 12.1662 | 1.90201 | Plastic | 1.54 | 55.68 | -29.87 |
| S12 | | asphere | 6.5383 | 2.03649 | | | | |
| S13 | IR | sphere | Infinity | 0.21000 | Glass | 1.517 | 64.17 | |
| S14 | | sphere | Infinity | 4.55155 | | | | |
| IMG | Image plane | sphere | Infinity | -0.01209 | | | | |
| Reference wavelength: 555nm | | | | | | | | |

Table 12 shows the high-order term coefficients that can be used for the aspheric surfaces of the optical system in the sixth embodiment. The aspheric surface shapes can be defined by the formula given in the first embodiment.

Table 12

| Sixth embodiment | | | | | | |
|---|---|---|---|---|---|---|
| Aspheric coefficient | | | | | | |
| Surface number | S1 | S2 | S3 | S4 | S5 | S6 |
| K | -3.6184E+00 | -4.2634E-01 | -4.5554E-01 | -5.1311E+00 | 1.3566E-02 | -1.1051E+01 |
| A4 | 4.7644E-01 | -4.6869E-02 | -5.7272E-01 | -3.7797E-02 | -3.8225E-01 | -2.0204E-01 |
| A6 | -1.2166E-02 | 8.4478E-02 | 1.5853E-01 | 1.1495E-01 | 8.5654E-02 | 7.6081E-04 |
| A8 | 2.1110E-03 | 6.3434E-03 | -1.8194E-02 | -8.4235E-03 | 2.2671E-03 | -1.2032E-04 |
| A10 | -1.9188E-04 | 2.2058E-03 | 1.8769E-03 | -2.3139E-03 | -1.9851E-03 | -1.6728E-05 |
| A12 | -1.1455E-04 | 1.2051E-05 | -4.0964E-04 | -8.6648E-04 | -5.3971E-04 | -5.8247E-05 |
| A14 | -1.4619E-04 | -5.7765E-05 | -1.2641E-04 | -2.2943E-04 | -2.1254E-04 | 1.5680E-07 |
| A16 | -1.2174E-04 | -7.3284E-05 | 8.0207E-06 | 2.2880E-04 | 1.9265E-04 | 2.0003E-05 |

(continued)

| Sixth embodiment | | | | | |
| :---: | :---: | :---: | :---: | :---: | :---: |
| Aspheric coefficient | | | | | |
| Surface number | S1 | S2 | S3 | S4 | S5 | S6 |
| A18 | -7.2384E-05 | -6.0745E-05 | -8.3433E-05 | -4.5419E-05 | -1.0368E-05 | 2.2669E-06 |
| A20 | -3.2140E-05 | -1.3461E-06 | 2.4976E-05 | 1.2545E-05 | -1.6317E-06 | 1.0357E-06 |
| Surface number | S7 | S8 | S9 | S10 | S11 | S12 |
| K | -4.1163E-01 | -3.0865E+00 | -5.2565E-01 | 3.4033E+01 | -3.1661 E+01 | -3.8758E+00 |
| A4 | 6.7348E-01 | 6.3342E-01 | -1.2322E-01 | -7.4191 E-02 | -3.3048E-01 | -7.0418E-01 |
| A6 | -6.9155E-02 | 1.0773E-02 | 8.2948E-02 | 6.6678E-02 | 1.2253E-01 | 9.6904E-02 |
| A8 | 7.4123E-03 | 2.4968E-03 | -7.5662E-03 | -2.5309E-02 | -2.4653E-02 | -3.1518E-02 |
| A10 | -2.7996E-03 | -3.7470E-03 | -3.6313E-03 | -1.0974E-02 | -1.7289E-02 | -8.1932E-03 |
| A12 | 1.6131E-04 | -8.1307E-04 | -1.7029E-03 | -5.4647E-04 | -2.4037E-03 | -7.9790E-04 |
| A14 | 3.4250E-05 | -9.8709E-05 | -5.0268E-04 | 9.0401E-04 | -2.0949E-03 | 9.2987E-04 |
| A16 | 1.0046E-07 | 5.3784E-05 | 4.1365E-05 | 1.4303E-03 | 1.3383E-04 | 2.2027E-03 |
| A18 | 6.2097E-06 | 4.8171E-05 | 1.6853E-05 | 4.3076E-04 | -1.7727E-04 | 1.1350E-03 |
| A20 | -2.0525E-05 | -7.1718E-05 | -7.1898E-05 | 9.4479E-05 | 2.4553E-05 | 6.7792E-04 |
| A22 | 0.0000E+00 | 0.0000E+00 | 0.0000E+00 | 0.0000E+00 | 6.8032E-05 | 1.7366E-04 |
| A24 | 0.0000E+00 | 0.0000E+00 | 0.0000E+00 | 0.0000E+00 | 5.4325E-05 | -3.7661E-05 |
| A26 | 0.0000E+00 | 0.0000E+00 | 0.0000E+00 | 0.0000E+00 | 2.9894E-05 | -1.1122E-04 |
| A28 | 0.0000E+00 | 0.0000E+00 | 0.0000E+00 | 0.0000E+00 | 6.3942E-06 | -7.9527E-05 |
| A30 | 0.0000E+00 | 0.0000E+00 | 0.0000E+00 | 0.0000E+00 | 1.1575E-06 | -3.0908E-05 |

FIG. 12 shows the longitudinal spherical aberration curve diagram, astigmatism curve diagram and distortion curve diagram of the optical system of the sixth embodiment. From the aberration diagrams of FIG. 12, it can be seen that the longitudinal spherical aberration, field curvature and distortion of the optical system are well controlled, thus the optical system of this embodiment has good imaging quality.

Seventh embodiment

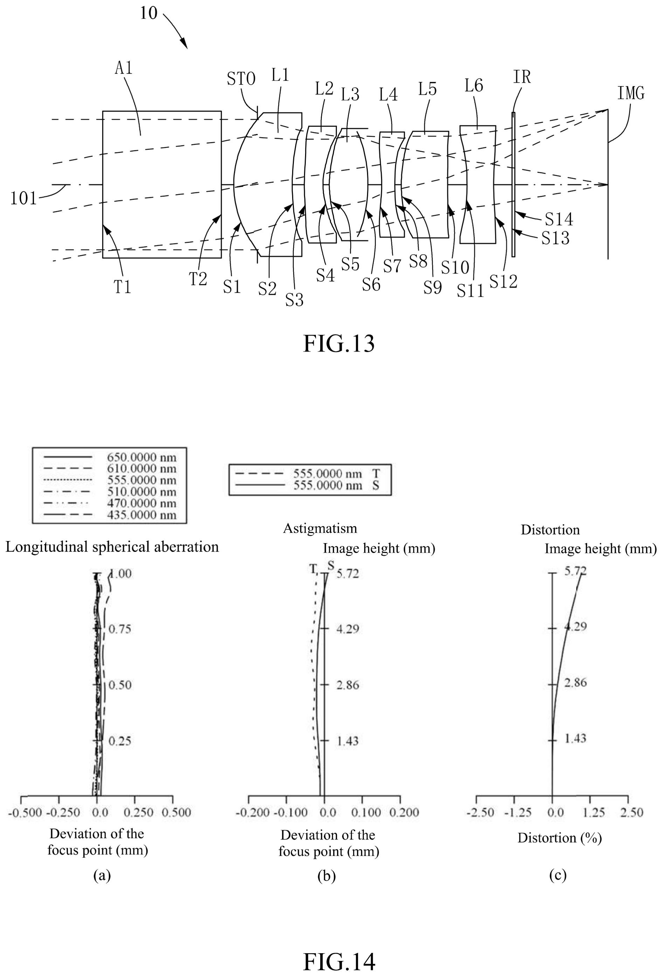

Referring to FIG. 13 and FIG. 14, a structure of an optical system 10 of the illustrated embodiment is the same as that of the first embodiment, please refer to it.

The parameters of the optical system 10 of the illustrated embodiment are given in Table 13. The meanings of each parameter are the same as those in the first embodiment and will not be repeated here.

Table 13

| Seventh embodiment | | | | | | | | |
| :---: | :---: | :---: | :---: | :---: | :---: | :---: | :---: | :---: |
| f=27.82mm, FNO=2.8, FOV=23°, TTL=27.8mm, ImgH=5.72mm | | | | | | | | |
| Surface numeral | Name | Surface type | Y radius | Thickness (mm) | Material (mm) | Refractive index | Abbe number | Effective focal length (mm) |
| Object side | Object side | sphere | Infinity | Infinity | | | | |
| | Prism | sphere | Infinity | 8.8 | Glass | | | |
| | | sphere | Infinity | 2.6847318 | | | | |

(continued)

| Seventh embodiment | | | | | | | | |
|---|---|---|---|---|---|---|---|---|
| f=27.82mm, FNO=2.8, FOV=23°, TTL=27.8mm, ImgH=5.72mm | | | | | | | | |
| Surface numeral | Name | Surface type | Y radius | Thickness (mm) | Material (mm) | Refractive index | Abbe number | Effective focal length (mm) |
| STO | Aperture | sphere | Infinity | -1.7518 | | | | |
| S1 | First lens L1 | asphere | 7.8843 | 4.3346 | Plastic | 1.54 | 55.68 | 26.33 |
| S2 | | asphere | 14.4162 | 0.9038 | | | | |
| S3 | Second lens L2 | asphere | 13.1197 | 1.3929 | Plastic | 1.64 | 23.97 | -13.44 |
| S4 | | asphere | 4.9804 | 0.4621 | | | | |
| S5 | Third lens L3 | asphere | 7.6789 | 2.8692 | Plastic | 1.54 | 55.68 | 9.07 |
| S6 | | asphere | -11.5481 | 1.0236 | | | | |
| S7 | Fourth lens L4 | asphere | -10.8810 | 0.9759 | Plastic | 1.55 | 55.93 | -13.45 |
| S8 | | asphere | 23.2901 | 0.4890 | | | | |
| S9 | Fifth lens L5 | asphere | 9.8999 | 3.4373 | Plastic | 1.59 | 28.39 | 19.30 |
| S10 | | asphere | 64.6918 | 1.4340 | | | | |
| S11 | Sixth lens L6 | asphere | -26.0827 | 1.9953 | Plastic | 1.54 | 55.68 | -20.89 |
| S12 | | asphere | 20.1838 | 1.3518 | | | | |
| S13 | IR | sphere | Infinity | 0.2100 | Glass | 1.517 | 64.17 | |
| S14 | | sphere | Infinity | 6.9328 | | | | |
| IMG | Image plane | sphere | Infinity | -0.0121 | | | | |
| Reference wavelength: 555nm | | | | | | | | |

Table 14 shows the high-order term coefficients that can be used for the aspheric surfaces of the optical system in the seventh embodiment. The aspheric surface shapes can be defined by the formula given in the first embodiment.

Table 14

| Seventh embodiment | | | | | | |
|---|---|---|---|---|---|---|
| Aspheric coefficient | | | | | | |
| Surface number | S1 | S2 | S3 | S4 | S5 | S6 |
| K | -3.3675E+00 | -1.7809E-02 | -3.8637E-02 | -5.1152E+00 | 1.3169E-02 | -1.1545E+01 |
| A4 | 5.0001 E-0 1 | -4.0934E-02 | -5.6373E-01 | -3.0914E-02 | -3.8290E-01 | -1.9938E-01 |
| A6 | -3.3933E-03 | 7.8249E-02 | 1.5800E-01 | 1.2326E-01 | 8.7162E-02 | -6.5874E-04 |
| A8 | 2.8888E-03 | 5.7871E-03 | -1.8486E-02 | -4.3427E-03 | 4.0101E-03 | -1.5718E-03 |
| A10 | 1.0615E-04 | 2.1320E-03 | 2.4264E-03 | -7.8616E-04 | -1.2569E-03 | -4.3094E-04 |
| A12 | 7.4638E-05 | 1.6053E-04 | -4.6839E-04 | -9.3803E-04 | -7.0004E-04 | -2.5033E-04 |
| A14 | 2.9235E-05 | -1.6373E-05 | -1.9568E-04 | -3.9245E-04 | -2.2593E-04 | 3.4136E-05 |
| A16 | 1.5129E-05 | 7.1685E-05 | 9.4645E-05 | 7.9159E-05 | 1.0031E-04 | 4.3301E-05 |
| A18 | 7.1032E-06 | 3.6666E-05 | -3.2772E-06 | -6.8473E-05 | -5.5015E-05 | 6.9674E-06 |
| A20 | -6.1068E-06 | 4.1231E-05 | 4.5954E-05 | -1.8496E-05 | -5.9940E-05 | -2.4743E-05 |

(continued)

| Surface number | S7 | S8 | S9 | S10 | S11 | S12 |
|---|---|---|---|---|---|---|
| K | 2.7230E-02 | 1.0512E+00 | 9.3061E-02 | -2.1025E+01 | 1.1995E+01 | 3.7907E-01 |
| A4 | 6.6297E-01 | 6.3832E-01 | -1.0252E-01 | -7.5061E-02 | -3.1481E-01 | -6.0974E-01 |
| A6 | -6.7603E-02 | 1.1491E-02 | 8.5599E-02 | 8.1139E-02 | 1.2072E-01 | 7.1506E-02 |
| A8 | 9.6822E-03 | 4.6467E-03 | -5.8789E-03 | -2.6105E-02 | -3.4939E-02 | -3.1944E-02 |
| A10 | -2.4959E-03 | -4.0872E-03 | -3.1365E-03 | -1.1746E-02 | -9.9625E-03 | 5.3744E-04 |
| A12 | 7.1505E-04 | -3.5885E-04 | -9.3532E-04 | -1.7936E-03 | -1.9764E-03 | -1.0011E-04 |
| A14 | 2.6819E-04 | 6.0948E-04 | 4.6905E-04 | 4.3768E-04 | -2.1210E-04 | 1.1798E-03 |
| A16 | 8.3816E-05 | 7.3150E-05 | -2.1474E-05 | -1.4722E-05 | -4.0728E-04 | 2.7473E-04 |
| A18 | -7.2367E-05 | -1.3752E-04 | -9.7781E-05 | -4.1602E-05 | -1.9170E-04 | 1.2541E-04 |
| A20 | -1.8425E-05 | -3.2237E-05 | -2.7775E-05 | 2.0619E-05 | -1.4290E-04 | -9.9062E-05 |
| A22 | 0.0000E+00 | 0.0000E+00 | 0.0000E+00 | 0.0000E+00 | -7.3177E-05 | 1.3113E-06 |
| A24 | 0.0000E+00 | 0.0000E+00 | 0.0000E+00 | 0.0000E+00 | 5.2248E-05 | 2.2658E-05 |
| A26 | 0.0000E+00 | 0.0000E+00 | 0.0000E+00 | 0.0000E+00 | 1.0652E-04 | 8.1516E-06 |
| A28 | 0.0000E+00 | 0.0000E+00 | 0.0000E+00 | 0.0000E+00 | 6.8236E-05 | -2.3002E-05 |
| A30 | 0.0000E+00 | 0.0000E+00 | 0.0000E+00 | 0.0000E+00 | 2.7850E-05 | -4.7761E-06 |

FIG. 14 shows the longitudinal spherical aberration curve diagram, astigmatism curve diagram and distortion curve diagram of the optical system of the seventh embodiment. From the aberration diagrams of FIG. 14, it can be seen that the longitudinal spherical aberration, field curvature and distortion of the optical system are well controlled, thus the optical system of this embodiment has good imaging quality.

Eighth embodiment

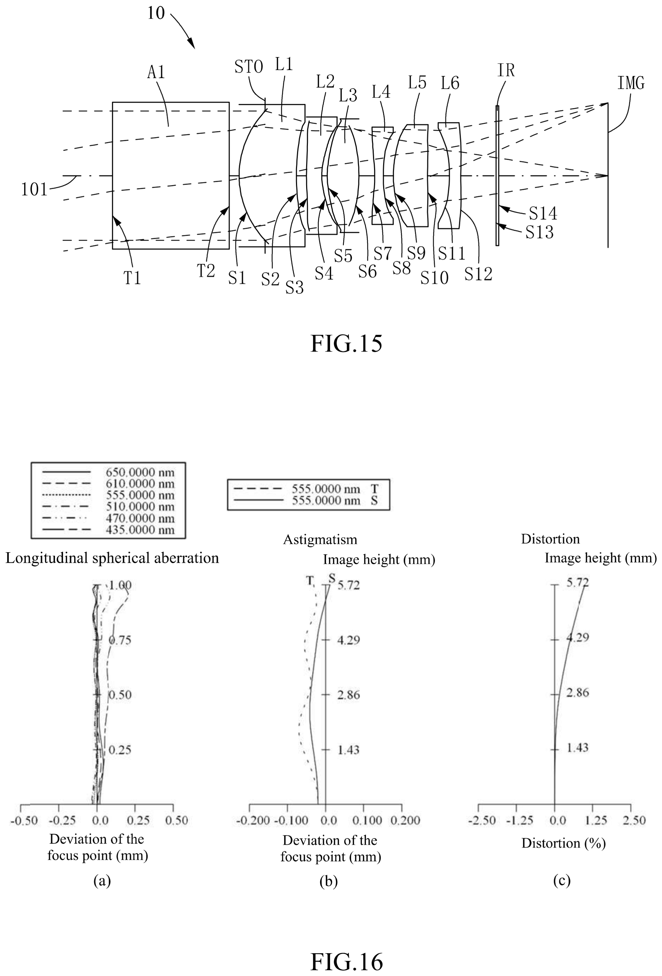

Referring to FIG. 15 and FIG. 16, a structure of an optical system 10 of the illustrated embodiment is the same as that of the first embodiment, please refer to it.

The parameters of the optical system 10 of the illustrated embodiment are given in Table 15. The meanings of each parameter are the same as those in the first embodiment and will not be repeated here.

Table 15

| Eighth embodiment | | | | | | | | |
|---|---|---|---|---|---|---|---|---|
| f=30.52mm, FNO=3, FOV=21 °, TTL=27.8mm, ImgH=5.72mm | | | | | | | | |
| Surface numeral | Name | Surface type | Y radius | Thickness (mm) | Material (mm) | Refractive index | Abbe number | Effective focal length (mm) |
| Object side | Object side | sphere | Infinity | Infinity | | | | |
| | Prism | sphere | Infinity | 8.8 | Glass | | | |
| | | sphere | Infinity | 2.6847318 | | | | |
| STO | Aperture | sphere | Infinity | -1.9499 | | | | |
| S1 | First lens L1 | asphere | 7.4734 | 4.3084 | Plastic | 1.54 | 55.68 | 23.05 |
| S2 | | asphere | 15.0882 | 0.7614 | | | | |
| S3 | Second lens L2 | asphere | 14.9827 | 1.1576 | Plastic | 1.64 | 23.97 | -12.16 |
| S4 | | asphere | 4.9694 | 0.4192 | | | | |

(continued)

| Eighth embodiment | | | | | | | | |
|---|---|---|---|---|---|---|---|---|
| f=30.52mm, FNO=3, FOV=21 °, TTL=27.8mm, ImgH=5.72mm | | | | | | | | |
| Surface numeral | Name | Surface type | Y radius | Thickness (mm) | Material (mm) | Refractive index | Abbe number | Effective focal length (mm) |
| Object side | Object side | sphere | Infinity | Infinity | | | | |
| S5 | Third lens L3 | asphere | 7.4372 | 2.3793 | Plastic | 1.54 | 55.68 | 9.00 |
| S6 | | asphere | -12.2360 | 1.1874 | | | | |
| S7 | Fourth lens L4 | asphere | -10.4507 | 0.6500 | Plastic | 1.55 | 55.93 | -11.61 |
| S8 | | asphere | 16.4679 | 0.7588 | | | | |
| S9 | Fifth lens L5 | asphere | 8.3766 | 2.5757 | Plastic | 1.59 | 28.39 | 15.44 |
| S10 | | asphere | 89.5222 | 1.6371 | | | | |
| S11 | Sixth lens L6 | asphere | -18.0383 | 0.8555 | Plastic | 1.54 | 55.68 | -19.16 |
| S12 | | asphere | 24.3105 | 2.6653 | | | | |
| S13 | IR | sphere | Infinity | 0.2100 | Glass | 1.517 | 64.17 | |
| S14 | | sphere | Infinity | 8.2463 | | | | |
| IMG | Image plane | sphere | Infinity | -0.0121 | | | | |
| Reference wavelength: 555nm | | | | | | | | |

Table 16 shows the high-order term coefficients that can be used for the aspheric surfaces of the optical system in the eighth embodiment. The aspheric surface shapes can be defined by the formula given in the first embodiment.

Table 16

| Eighth embodiment | | | | | |
|---|---|---|---|---|---|
| Aspheric coefficient | | | | | |
| Surface number | S1 | S2 | S3 | S4 | S5 | S6 |
| K | -3.1749E+00 | -7.6448E-02 | -5.1953E-03 | -5.1663E+00 | 5.9487E-02 | -1.2220E+01 |
| A4 | 5.1500E-01 | -4.1643E-02 | -5.6340E-01 | -3.4220E-02 | -3.7839E-01 | -1.9769E-01 |
| A6 | -4.9804E-03 | 8.1897E-02 | 1.5976E-01 | 1.2181E-01 | 8.8073E-02 | -4.8791E-03 |
| A8 | 2.0406E-03 | 6.7574E-03 | -1.8757E-02 | -3.3435E-03 | 2.5306E-03 | -2.9828E-03 |
| A10 | -4.6520E-04 | 8.8085E-04 | 2.7222E-03 | 3.4846E-04 | -9.7777E-04 | -1.7095E-04 |
| A12 | -1.0397E-04 | 3.8263E-04 | 8.9430E-05 | -6.4940E-04 | -1.1261E-03 | -7.1157E-04 |
| A14 | -4.5535E-07 | 1.3167E-04 | 3.9845E-05 | -4.9217E-05 | 9.6603E-05 | 1.4129E-04 |
| A16 | 3.7178E-05 | 4.2912E-04 | 4.1691E-04 | 5.7630E-05 | -1.1906E-04 | -6.3924E-05 |
| A18 | 3.3138E-05 | 1.3039E-04 | -2.0989E-05 | -8.9147E-06 | -9.4177E-06 | -1.4001E-05 |
| A20 | -9.1034E-06 | 2.8142E-05 | -1.2743E-05 | -5.8482E-06 | -1.2606E-05 | -6.2977E-06 |
| Surface number | S7 | S8 | S9 | S10 | S11 | S12 |
| K | 4.4908E-01 | 4.0005E+00 | 2.3352E-01 | 5.4133E+01 | 1.8707E+01 | -2.3744E+01 |
| A4 | 6.5290E-01 | 6.4248E-01 | -9.1468E-02 | -5.9072E-02 | -4.2450E-01 | -7.2650E-01 |
| A6 | -7.9129E-02 | 2.1114E-02 | 8.5098E-02 | 6.3237E-02 | 1.9044E-01 | 1.3753E-01 |

(continued)

| Surface number | S7 | S8 | S9 | S10 | S11 | S12 |
|---|---|---|---|---|---|---|
| A8 | 1.0587E-02 | 2.4351E-03 | -6.7833E-03 | -2.1309E-02 | -3.6603E-02 | -4.6836E-02 |
| A10 | -3.1666E-03 | -5.0316E-03 | -2.9858E-03 | -1.3063E-02 | -1.4711E-02 | 4.6548E-03 |
| A12 | 4.1246E-04 | -2.5343E-04 | -4.1449E-04 | -5.2156E-04 | -4.3612E-03 | 8.2261E-04 |
| A14 | 1.1126E-03 | 1.0644E-03 | 9.4229E-04 | 5.6791E-04 | 1.4849E-03 | 1.4570E-03 |
| A16 | 4.0162E-04 | -2.4429E-04 | -1.0937E-04 | -8.1459E-04 | 6.5968E-04 | -7.1919E-04 |
| A18 | 2.6042E-04 | -3.5069E-04 | -3.6981E-04 | -1.7464E-05 | -1.7646E-04 | -3.2326E-05 |
| A20 | 3.3079E-04 | 3.0751E-04 | 7.4373E-05 | 3.5377E-04 | -5.7974E-04 | 5.3001E-04 |
| A22 | 0.0000E+00 | 0.0000E+00 | 0.0000E+00 | 0.0000E+00 | -5.7673E-04 | 3.9693E-04 |
| A24 | 0.0000E+00 | 0.0000E+00 | 0.0000E+00 | 0.0000E+00 | 8.4320E-05 | -1.4512E-04 |
| A26 | 0.0000E+00 | 0.0000E+00 | 0.0000E+00 | 0.0000E+00 | 2.2071E-04 | -6.9847E-04 |
| A28 | 0.0000E+00 | 0.0000E+00 | 0.0000E+00 | 0.0000E+00 | 1.2034E-04 | -5.4017E-04 |
| A30 | 0.0000E+00 | 0.0000E+00 | 0.0000E+00 | 0.0000E+00 | 1.8230E-05 | -1.8868E-04 |

FIG. 16 shows the longitudinal spherical aberration curve diagram, astigmatism curve diagram and distortion curve diagram of the optical system of the eighth embodiment. From the aberration diagrams of FIG. 16, it can be seen that the longitudinal spherical aberration, field curvature and distortion of the optical system are well controlled, thus the optical system of this embodiment has good imaging quality.

Ninth embodiment

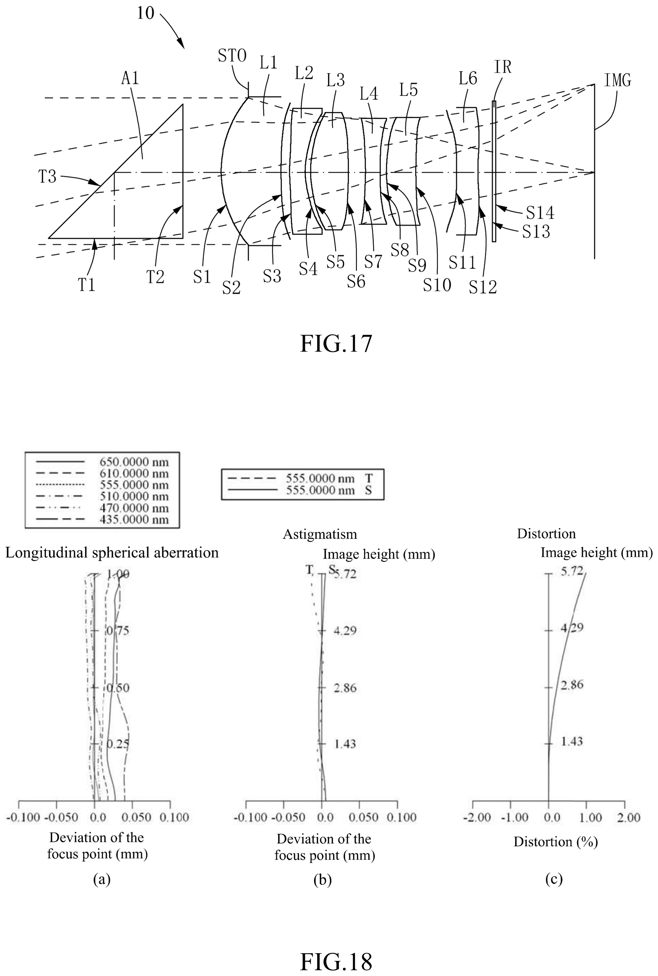

Referring to FIG. 17 and FIG. 18, a structure of an optical system 10 of the illustrated embodiment is the same as that of the first embodiment, please refer to it.

The parameters of the optical system 10 of the illustrated embodiment are given in Table 17. The meanings of each parameter are the same as those in the first embodiment and will not be repeated here.

Table 17

| Ninth embodiment | | | | | | | | |
|---|---|---|---|---|---|---|---|---|
| f=25.07mm, FNO=2.58, FOV=25.47°, TTL=24.41mm, ImgH=5.72mm | | | | | | | | |
| Surface numeral | Name | Surface type | Y radius | Thickness (mm) | Material (mm) | Refractive index | Abbe number | Effective focal length (mm) |
| Object side | Object side | sphere | Infinity | Infinity | | | | |
| | Prism | sphere | Infinity | 8.8 | Glass | | | |
| | | sphere | Infinity | 2.6847318 | | | | |
| STO | Aperture | sphere | Infinity | -1.7845 | | | | |
| S1 | First lens L1 | asphere | 7.4894 | 3.9000 | Plastic | 1.535 | 55.68 | 19.99 |
| S2 | | asphere | 20.3199 | 0.5708 | | | | |
| S3 | Second lens L2 | asphere | 13.0906 | 1.0148 | Plastic | 1.636 | 23.97 | -12.14 |
| S4 | | asphere | 4.7297 | 0.3654 | | | | |
| S5 | Third lens L3 | asphere | 6.6839 | 2.4500 | Plastic | 1.535 | 55.68 | 10.74 |
| S6 | | asphere | -36.4779 | 1.1319 | | | | |

(continued)

| Surface numeral | Name | Surface type | Y radius | Thickness (mm) | Material (mm) | Refractive index | Abbe number | Effective focal length (mm) |
|---|---|---|---|---|---|---|---|---|
| | | | | Ninth embodiment | | | | |
| | | f=25.07mm, FNO=2.58, FOV=25.47°, TTL=24.41mm, ImgH=5.72mm | | | | | | |
| Object side | Object side | sphere | Infinity | Infinity | | | | |
| S7 | Fourth lens L4 | asphere | -12.5110 | 0.9500 | Plastic | 1.544 | 55.93 | -19.4 |
| S8 | | asphere | 70.9096 | 0.4164 | | | | |
| S9 | Fifth lens L5 | asphere | 9.3984 | 1.9200 | Plastic | 1.639 | 23.52 | 24.65 |
| S10 | | asphere | 21.1973 | 2.6631 | | | | |
| S11 | Sixth lens L6 | asphere | 720.2900 | 1.4000 | Plastic | 1.535 | 55.68 | -25.53 |
| S12 | | asphere | 13.4339 | 0.9528 | | | | |
| S13 | IR | sphere | Infinity | 0.2100 | Glass | 1.517 | 64.17 | |
| S14 | | sphere | Infinity | 6.4635 | | | | |
| IMG | Image plane | sphere | Infinity | 0.0000 | | | | |
| | | | Reference wavelength: 555nm | | | | | |

Table 18 shows the high-order term coefficients that can be used for the aspheric surfaces of the optical system in the ninth embodiment. The aspheric surface shapes can be defined by the formula given in the first embodiment.

Table 18

| | Ninth embodiment | | | | | |
|---|---|---|---|---|---|---|
| | Aspheric coefficient | | | | | |
| Surface number | S1 | S2 | S3 | S4 | S5 | S6 |
| K | -3.2424E+00 | -5.0642E+00 | -8.6282E-01 | -5.2999E+00 | 1.9743E-01 | -7.1893E+01 |
| A4 | 9.3996E-04 | -2.0125E-03 | -8.0967E-03 | -6.5312E-03 | -5.7539E-03 | -1.5210E-04 |
| A6 | -1.8874E-05 | 2.0551E-04 | 9.0306E-04 | 1.1789E-03 | 6.3531 E-04 | 1.1507E-05 |
| A8 | 3.1891E-06 | 1.5572E-05 | -2.1842E-06 | -9.3543E-05 | -5.7329E-05 | -3.0500E-05 |
| A10 | -4.8263E-07 | -4.7353E-06 | -1.0217E-05 | 2.4551E-05 | 2.7686E-05 | 4.2655E-06 |
| A12 | 5.2313E-08 | 5.7812E-07 | 1.0925E-06 | -7.0073E-06 | -7.6054E-06 | -2.7884E-07 |
| A14 | -3.5885E-09 | -5.0004E-08 | -4.8752E-08 | 9.7010E-07 | 9.9647E-07 | 7.2149E-09 |
| A16 | 1.4720E-10 | 2.9369E-09 | 7.6740E-10 | -6.9075E-08 | -6.8892E-08 | 2.0687E-10 |
| A18 | -3.2849E-12 | -9.6785E-11 | 9.5189E-12 | 2.4880E-09 | 2.4518E-09 | -2.0820E-11 |
| A20 | 3.0606E-14 | 1.3018E-12 | -3.4481E-13 | -3.6184E-11 | -3.5690E-11 | 4.1567E-13 |
| Surface number | S7 | S8 | S9 | S10 | S11 | S12 |
| K | 5.3726E+00 | -9.9000E+01 | -8.2211E-01 | -6.8089E+00 | -9.9000E+01 | -5.2792E+0I |
| A4 | 1.0038E-02 | 6.4432E-03 | -5.0442E-03 | -4.9204E-03 | -8.0136E-03 | -4.0026E-03 |
| A6 | -1.3251E-03 | 2.5619E-04 | 1.3879E-03 | 8.5736E-04 | 4.9014E-04 | 2.8250E-04 |
| A8 | 4.8553E-05 | -2.9448E-04 | -2.1625E-04 | -7.1903E-05 | 3.6460E-05 | -4.3175E-05 |
| A10 | -1.3772E-05 | 8.8952E-06 | -1.7557E-06 | -2.0406E-06 | -1.6888E-05 | 2.0559E-05 |

(continued)

| Surface number | S7 | S8 | S9 | S10 | S11 | S12 |
|---|---|---|---|---|---|---|
| A12 | 5.9857E-06 | 1.1500E-05 | 7.2186E-06 | 1.9071E-06 | 4.9600E-07 | -7.3804E-06 |
| A14 | -9.6976E-07 | -2.3021E-06 | -1.2365E-06 | -2.5700E-07 | 1.3085E-06 | 1.7394E-06 |
| A16 | 7.8804E-08 | 2.0085E-07 | 9.8123E-08 | 1.5362E-08 | -4.9008E-07 | -2.8112E-07 |
| A18 | -3.2773E-09 | -8.6443E-09 | -3.8936E-09 | -3.8914E-10 | 9.7488E-08 | 3.1947E-08 |
| A20 | 5.5775E-11 | 1.4977E-10 | 6.2486E-11 | 2.4075E-12 | -1.2489E-08 | -2.5662E-09 |
| A22 | 0.0000E+00 | 0.0000E+00 | 0.0000E+00 | 0.0000E+00 | 1.0760E-09 | 1.4387E-10 |
| A24 | 0.0000E+00 | 0.0000E+00 | 0.0000E+00 | 0.0000E+00 | -6.2069E-11 | -5.4437E-12 |
| A26 | 0.0000E+00 | 0.0000E+00 | 0.0000E+00 | 0.0000E+00 | 2.2986E-12 | 1.2999E-13 |
| A28 | 0.0000E+00 | 0.0000E+00 | 0.0000E+00 | 0.0000E+00 | -4.9359E-14 | -1.7080E-15 |
| A30 | 0.0000E+00 | 0.0000E+00 | 0.0000E+00 | 0.0000E+00 | 4.6648E-16 | 8.6878E-18 |

FIG. 18 shows the longitudinal spherical aberration curve diagram, astigmatism curve diagram and distortion curve diagram of the optical system of the ninth embodiment. From the aberration diagrams of FIG. 18, it can be seen that the longitudinal spherical aberration, field curvature and distortion of the optical system are well controlled, thus the optical system of this embodiment has good imaging quality.

Table 19 shows the values of the various conditional expressions in the optical system 10 of the first to the ninth embodiments, wherein E1 represents the first embodiment, E2 represents the second embodiment, and so on up to E9 representing the ninth embodiment.

Table 19

| Conditional expression | E1 | E2 | E3 | E4 | E5 | E6 | E7 | E8 | E9 |
|---|---|---|---|---|---|---|---|---|---|
| FNO | 2.600 | 2.580 | 2.400 | 2.560 | 2.300 | 2.200 | 2.800 | 3.000 | 2.580 |
| FOV | 25.350 | 25.690 | 26.870 | 25.440 | 31.510 | 30.890 | 23.000 | 21.000 | 25.470 |
| ImgH/FNO | 2.315 | 2.333 | 2.508 | 2.234 | 2.617 | 2.736 | 2.043 | 1.907 | 2.217 |
| R6/R7 | 1.054 | 3.830 | 1.326 | 3.262 | 0.947 | 0.942 | 1.061 | 1.171 | 2.916 |
| SD6/(CT3+ET3) | 0.673 | 0.819 | 0.540 | 0.892 | 1.208 | 1.246 | 0.835 | 1.117 | 1.099 |
| SD12/(CT6+ET6) | 0.936 | 0.931 | 1.057 | 1.113 | 1.077 | 1.059 | 0.867 | 1.518 | 1.179 |
| (\|f2\|+\|f3\|/\|f4\|+\|f5\|) | 0.657 | 0.426 | 0.667 | 0.697 | 0.640 | 0.639 | 0.687 | 0.782 | 0.519 |
| (f1+\|f6\|)/f | 1.866 | 2.131 | 1.966 | 1.764 | 2.732 | 2.645 | 1.697 | 1.383 | 1.816 |
| f1/f | 1.049 | 1.199 | 1.077 | 0.839 | 1.273 | 1.258 | 0.946 | 0.755 | 0.797 |
| f2/f | -0.527 | -0.541 | -0.541 | -0.544 | -0.640 | -0.632 | -0.483 | -0.399 | -0.484 |
| f3/f | 0.347 | 0.387 | 0.350 | 0.446 | 0.424 | 0.419 | 0.326 | 0.295 | 0.428 |
| f4/f | -0.546 | -1.029 | -0.520 | -0.639 | -0.702 | -0.691 | -0.483 | -0.380 | -0.774 |
| f5/f | 0.785 | 1.153 | 0.816 | 0.782 | 0.961 | 0.953 | 0.694 | 0.506 | 0.983 |
| f6/f | -0.817 | -0.932 | -0.890 | -0.926 | -1.459 | -1.387 | -0.751 | -0.628 | -1.018 |
| R1/f | 0.302 | 0.294 | 0.320 | 0.285 | 0.378 | 0.373 | 0.283 | 0.245 | 0.299 |
| R2/f | 0.529 | 0.449 | 0.581 | 0.694 | 0.687 | 0.679 | 0.518 | 0.494 | 0.811 |
| R3/f | 0.471 | 0.519 | 0.512 | 0.506 | 0.605 | 0.598 | 0.472 | 0.491 | 0.522 |
| R4/f | 0.188 | 0.201 | 0.198 | 0.201 | 0.234 | 0.231 | 0.179 | 0.163 | 0.189 |
| R5/f | 0.292 | 0.227 | 0.304 | 0.275 | 0.361 | 0.357 | 0.276 | 0.244 | 0.267 |
| R6/f | -0.433 | -2.039 | -0.383 | -1.564 | -0.548 | -0.539 | -0.415 | -0.401 | -1.455 |
| R7/f | -0.411 | -0.532 | -0.289 | -0.480 | -0.579 | -0.572 | -0.391 | -0.342 | -0.499 |

(continued)

| Conditional expression | E1 | E2 | E3 | E4 | E5 | E6 | E7 | E8 | E9 |
|---|---|---|---|---|---|---|---|---|---|
| \|R8\|/f | 1.128 | 10.468 | 17.218 | 1.312 | 1.170 | 1.145 | 0.837 | 0.540 | 2.828 |
| R9/f | 0.404 | 0.405 | 0.473 | 0.356 | 0.437 | 0.431 | 0.356 | 0.274 | 0.375 |
| R10/f | 2.734 | 0.806 | 20.332 | 1.424 | 1.648 | 1.607 | 2.325 | 2.933 | 0.846 |
| \|R11\|/f | 1.456 | 2.119 | 2.948 | 3.096 | 0.542 | 0.565 | 0.938 | 0.591 | 28.731 |
| R12/f | 0.639 | 0.664 | 0.575 | 0.424 | 0.302 | 0.304 | 0.726 | 0.797 | 0.536 |
| TTL/ImgH | 4.610 | 4.068 | 4.651 | 4.283 | 4.070 | 4.086 | 4.860 | 4.860 | 4.267 |
| ΣCT/ΣAT | 3.899 | 2.617 | 4.365 | 1.740 | 4.098 | 4.040 | 3.479 | 2.503 | 2.260 |
| AT34/(AT12+AT23 +AT45) | 0.570 | 1.816 | 0.670 | 0.188 | 0.613 | 0.636 | 0.552 | 0.612 | 0.837 |
| AT56/(AT12+AT23 +AT45) | 0.795 | 2.724 | 0.884 | 3.501 | 0.547 | 0.540 | 0.773 | 0.844 | 1.969 |
| CT1/CT2 | 3.053 | 3.449 | 3.107 | 2.458 | 3.107 | 3.107 | 3.112 | 3.722 | 3.843 |
| CT2/CT3 | 0.394 | 0.344 | 0.291 | 0.305 | 0.565 | 0.554 | 0.485 | 0.487 | 0.414 |
| CT3/CT4 | 3.455 | 2.884 | 3.578 | 3.588 | 2.303 | 2.446 | 2.940 | 3.660 | 2.579 |
| CT4/CT5 | 0.298 | 0.710 | 0.395 | 0.426 | 0.344 | 0.330 | 0.284 | 0.252 | 0.495 |
| CT5/CT6 | 1.744 | 0.690 | 1.826 | 0.986 | 1.632 | 1.639 | 1.723 | 3.011 | 1.371 |
| TTL/BEL | 3.679 | 3.359 | 4.215 | 3.744 | 4.083 | 4.086 | 3.278 | 2.502 | 3.201 |

By satisfying the above conditional expressions, the refractive power distribution may be uniform and reasonable, aberrations may be easily corrected, and good image quality may be achieved. The optical system 10 provided by the above embodiments may meet the characteristics of a large zoom range and clear imaging. These optical systems 10 can ensure that the lens provides sufficient light intake and high-definition imaging effects while maintaining long-range shooting capabilities.

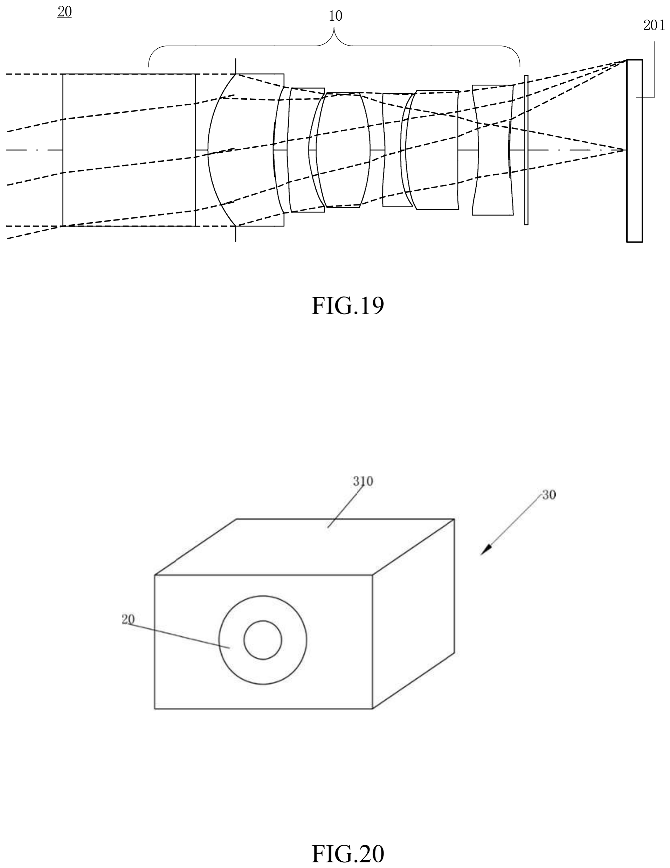

Referring to FIG. 19, the present disclosure also provides an image module 20, which includes the optical system 10 of any of the above embodiments and a photosensitive chip 201. The photosensitive chip 201 is arranged on the image side of the optical system 10 and the photosensitive chip 201 and the optical system 10 may be fixed by a bracket. The photosensitive chip 201 may be a CCD sensor (Charge Coupled Device) or a CMOS sensor (Complementary Metal Oxide Semiconductor). Generally, during assembly, the image plane IMG of the optical system 10 overlaps with a photosensitive surface of the photosensitive chip 201. By adopting the above optical system 10, the image module 20 may ensure that the lens provides sufficient light intake and high-definition imaging effects while maintaining long-range shooting capabilities.

Referring to FIG. 20, the present disclosure also provides an electronic device 30. The electronic device 30 includes a housing 310 and the image module 20 of any one of the above embodiments, and the image module 20 is arranged in the housing 310. The electronic device 30 can be, but is not limited to, a vehicle lens, a VR (Virtual Reality) glass, a smart phone, a smart watch, an e-book reader, a tablet computer, a biometric device (such as fingerprint recognition devices or pupil recognition devices, etc.), a PDA (Personal Digital Assistant), etc. Since the above image module 20 may meet the characteristics of a large aperture and clear imaging, when using the above image module 20, the electronic device 30 may ensure that the lens provides sufficient light intake and high-definition imaging effects while maintaining long-range shooting capabilities.

The above disclosure is only some of the preferred embodiments of the present disclosure. Of course, it cannot be used to limit the scope of the present disclosure. Those skilled in the field can understand and implement all or part of the processes of the above embodiments, and make equivalent changes based on the claims of the present disclosure, which still fall within the scope of the present disclosure.

## Claims

1. An optical system (10), from an object side to an imaging side along an optical axis (101), sequentially comprising:

a first lens (L1) having positive refractive power, an object side surface (S1) of the first lens (L1) being convex near the optical axis (101), an imaging side surface (S2) of the first lens (L1) being concave near the optical axis (101); a second lens (L2) having negative refractive power, an object side surface (S3) of the second lens (L2) being convex near the optical axis (101), an imaging side surface (S4) of the second lens (L2) being concave near the optical axis (101);

a third lens (L3) having positive refractive power, an object side surface (S5) of the third lens (L3) being convex near the optical axis (101), an imaging side surface (S6) of the third lens (L3) being convex near the optical axis (101);

a fourth lens (L4) having negative refractive power, an imaging side surface (S8) of the fourth lens (L4) being concave near the optical axis (101);

a fifth lens (L5) having positive refractive power, an object side surface (S9) of the fifth lens (L5) being convex near the optical axis (101), an imaging side surface (S10) of the fifth lens (L5) being concave near the optical axis (101);

a sixth lens (L6) having negative refractive power, and an imaging side surface (S12) of the sixth lens (L6) being concave near the optical axis (101); and

an image plane (IMG);

wherein the optical system (10) satisfies following conditional expressions:

$$1.9 < FNO < 3.5, \text{ and } 19° < FOV < 33°;$$

wherein, FNO is an aperture number of the optical system (10), and FOV is the maximum field of view angle of the optical system (10).

2. The optical system (10) of claim 1, wherein the optical system (10) further satisfies at least one of following conditional expressions:

$$1.65mm < ImgH/FNO < 3mm,$$

and

$$3.7 < TTL/ImgH < 5.2,$$

wherein, ImgH is half of an image height corresponding to the maximum field of view angle of the optical system (10), and TTL is a distance from the object side surface (S1 of the first lens (L1)to the image plane (IMG) along the optical axis (101).

3. The optical system (10) of claim 1, wherein the optical system (10) further satisfies following conditional expression:

$$0.9 < R6/R7 < 4,$$

wherein, R6 is a radius of curvature of the imaging side surface (S6) of the third lens (L3) at the optical axis (101), and R7 is a radius of curvature of the object side surface (S7) of the fourth lens (L4) at the optical axis (101).

4. The optical system (10) of claim 1, wherein the optical system (10) further satisfies at least one of following conditional expressions:

$$0.4 < SD6/(CT3+ET3) < 1.4,$$

and

$$0.7 < SD12/(CT6+ET6) < 1.7,$$

wherein, SD6 is an effective semi-aperture of the imaging side surface (S6) of the third lens (L3), CT3 is a center thickness of the third lens (L3), ET3 is an edge thickness of the third lens (L3), SD12 is an effective semi-aperture of the imaging side surface (S12) of the sixth lens (L6), CT6 is a center thickness of the sixth lens (L6), and ET6 is an edge thickness of the sixth lens (L6).

5. The optical system (10) of claim 1, wherein the optical system (10) further satisfies following conditional expression:

$$2<TTL/BEL<5,$$

wherein, TTL is a distance along the optical axis (101) from the object side surface (S1) of the first lens (L1) to the image plane (IMG), and BEL is the minimum distance from the object side surface (S11) of the sixth lens (L6) to the image plane (IMG).

6. The optical system (10) of claim 1, wherein the optical system (10) further satisfies at least one of following conditional expressions:

$$0.4<(|f2|+|f3|)/(|f4|+|f5|)<0.8,$$

and

$$1.35<(f1+|f6|)/f<2.75,$$

wherein, f is an effective focal length of the optical system (10), f1 is an effective focal length of the first lens (L1), f2 is an effective focal length of the second lens (L2), f3 is an effective focal length of the third lens (L3), f4 is an effective focal length of the fourth lens (L4), f5 is an effective focal length of the fifth lens (L5), and f6 is an effective focal length of the sixth lens (L6).

7. The optical system (10) of claim 1, wherein the optical system (10) further satisfies at least one of following conditional expressions:

$$0.6<f1/f<1.5,$$

$$-0.8<f2/f<-0.3,$$

$$0.2<f3/f<0.6,$$

$$-1.2<f4/f<-0.3,$$

$$0.4<f5/f<1.3,$$

and

$$-1.6<f6/f<-0.5,$$

wherein, f is the effective focal length of the optical system (10), f1 is the effective focal length of the first lens (L1), f2 is an effective focal length of the second lens (L2), f3 is an effective focal length of the third lens (L3), f4 is an effective focal length of the fourth lens (L4), f5 is an effective focal length of the fifth lens (L5), and f6 is an effective focal length of the sixth lens (L6).

8. The optical system (10) of claim 1, wherein the optical system (10) further satisfies at least one of following conditional expressions:

$$0.15<R1/f<0.45,$$

$$0.35<R2/f<1.1,$$

$$0.3<R3/f<0.8,$$

$$0.1 < R4/f < 0.35,$$

$$0.15 < R5/f < 0.45,$$

and

$$-2.3 < R6/f < -0.2,$$

wherein, f is the effective focal length of the optical system (10), R1 is a radius of curvature of the object side surface (S1) of the first lens (L1) at the optical axis (101), R2 is a radius of curvature of the imaging side surface (S2) of the first lens (L 1) at the optical axis (101), R3 is a radius of curvature of the object side surface (S3) of the second lens (L2) at the optical axis (101), R4 is a radius of curvature of the imaging side surface (S4) of the second lens (L2) at the optical axis (101), R5 is a radius of curvature of the object side surface (S5) of the third lens (L3) at the optical axis (101), and R6 is the radius of curvature of the imaging side surface (S6) of the third lens (L3) at the optical axis (101).

9. The optical system (10) of claim 1, wherein the optical system (10) further satisfies at least one of following conditional expressions:

$$-0.9 < R7/f < -0.1,$$

$$0.4 < |R8|/f,$$

$$0.2 < R9/f < 0.6,$$

$$0.6 < R10/f,$$

$$0.5 < |R11|/f,$$

and

$$0.2 < R12/f < 0.95,$$

wherein, f is the effective focal length of the optical system (10), R7 is the radius of curvature of an object side surface (S7) of the fourth lens (L4) at the optical axis (101), R8 is a radius of curvature of the imaging side surface (S8) of the fourth lens (L4) at the optical axis (101), R9 is a radius of curvature of the object side surface (S9) of the fifth lens (L5) at the optical axis (101), R10 is a radius of curvature of the imaging side surface (10) of the fifth lens (L5) at the optical axis (101), R11 is a radius of curvature of an object side surface (S11) of the sixth lens (L6) at the optical axis (101), and R12 is a radius of curvature of the imaging side surface (S12) of the sixth lens (L6) at the optical axis (101).

10. The optical system (10) of claim 1, wherein the optical system (10) further satisfies at least one of following conditional expressions:

$$2.2 < CT1/CT2 < 4.5,$$

$$0.2 < CT2/CT3 < 0.7,$$

$$1.5 < CT3/CT4 < 4.5,$$

$$0.18 < CT4/CT5 < 1,$$

and

$$0.6<CT5/CT6<3.6,$$

wherein, CT1 is a center thickness of the first lens (L1) at the optical axis (101), CT2 is a center thickness of the second lens (L2) at the optical axis (101), CT3 is a center thickness of the third lens (L3) at the optical axis (101), CT4 is a center thickness of the fourth lens (L4) at the optical axis (101), CT5 is a center thickness of the fifth lens (L5) at the optical axis (101), and CT6 is a central thickness of the sixth lens (L6) at the optical axis (101).

11. The optical system (10) of claim 1, wherein the optical system (10) further satisfies following conditional expression:

$$1.5<\Sigma CT/\Sigma AT<5,$$

wherein, $\Sigma CT$ is a sum of central thicknesses of the first lens (L1) to the sixth lens (L6) at the optical axis (101), and $\Sigma AT$ is a sum of air spacings between the first lens (L 1) to the sixth lens (L6) at the optical axis (101).

12. The optical system (10) of claim 1, wherein the optical system (10) further satisfies following conditional expression:

$$0.1<AT34/(AT12+AT23+AT45)<2,$$

wherein, AT12 is an air spacing between the first lens (L1) and the second lens (L2) at the optical axis (101), AT23 is an air spacing between the second lens (L2) and the third lens (L3) at the optical axis (101), AT34 is an air spacing between the third lens (L3) and the fourth lens (L4) at the optical axis (101), and AT45 is an air spacing between the fourth lens (L4) and the fifth lens (L5) at the optical axis (101).

13. The optical system (10) of claim 1, wherein the optical system (10) further satisfies following conditional expression:

$$0.35<AT56/(AT12+AT23+AT45)<3.9,$$

wherein, AT12 is an air spacing between the first lens (L1) and the second lens (L2) at the optical axis (101), AT23 is an air spacing between the second lens (L2) and the third lens (L3) at the optical axis (101), AT45 is an air spacing between the fourth lens (L4) and the fifth lens (L5) at the optical axis (101), and AT56 is an air spacing between the fifth lens (L5) and the sixth lens (L6) at the optical axis (101).

14. An image module (20) comprising a photosensitive chip (201) and the optical system (10) of any one of claims 1 to 13, wherein the photosensitive chip (201) is arranged on the imaging side of the optical system (10).

15. An electronic device (30) comprising a housing (310) and the image module (20) of claim 14, wherein the image module (20) is arranged in the housing (310).

**EP 4 664 176 A2**

**FIG.1**

Longitudinal spherical aberration

| | |
|---|---|
| | 650.0000 nm |
| | 610.0000 nm |
| | 555.0000 nm |
| | 510.0000 nm |
| | 470.0000 nm |
| | 435.0000 nm |

| | |
|---|---|
| | 555.0000 nm  T |
| | 555.0000 nm  S |

Astigmatism
Image height (mm)

Distortion
Image height (mm)

Deviation of the
focus point (mm)

(a)

Deviation of the
focus point (mm)

(b)

Distortion (%)

(c)

**FIG.2**

33

FIG.3

FIG.4

**FIG.5**

Longitudinal spherical aberration

Astigmatism
Image height (mm)

Distortion
Image height (mm)

Deviation of the
focus point (mm)

(a)

Deviation of the
focus point (mm)

(b)

Distortion (%)

(c)

**FIG.6**

FIG.7

Longitudinal spherical aberration

Astigmatism
Image height (mm)

Distortion
Image height (mm)

Deviation of the
focus point (mm)

(a)

Deviation of the
focus point (mm)

(b)

Distortion (%)

(c)

FIG.8

FIG.9

Longitudinal spherical aberration

Astigmatism
Image height (mm)

Distortion
Image height (mm)

Deviation of the
focus point (mm)

(a)

Deviation of the
focus point (mm)

(b)

Distortion (%)

(c)

FIG.10

FIG.11

Longitudinal spherical aberration

Astigmatism
Image height (mm)

Distortion
Image height (mm)

Deviation of the
focus point (mm)

(a)

Deviation of the
focus point (mm)

(b)

Distortion (%)

(c)

FIG.12

FIG.13

FIG.14

FIG.15

Longitudinal spherical aberration

Astigmatism
Image height (mm)

Distortion
Image height (mm)

Deviation of the
focus point (mm)

(a)

Deviation of the
focus point (mm)

(b)

Distortion (%)

(c)

FIG.16

FIG.17

| | |
|---|---|
| ——— | 650.0000 nm |
| – – – | 610.0000 nm |
| ·········· | 555.0000 nm |
| –·–·– | 510.0000 nm |
| –··–··– | 470.0000 nm |
| – – – | 435.0000 nm |

| | | |
|---|---|---|
| – – – | 555.0000 nm | T |
| ——— | 555.0000 nm | S |

Longitudinal spherical aberration

Astigmatism
Image height (mm)

Distortion
Image height (mm)

Deviation of the
focus point (mm)

(a)

Deviation of the
focus point (mm)

(b)

Distortion (%)

(c)

FIG.18

FIG.19

FIG.20